# EUROPÄISCHE PATENTSCHRIFT

(11) **EP 3 752 401 B1**
(45) Veröffentlichungstag und Bekanntmachung des Hinweises auf die Patenterteilung: **21.06.2023**
(21) Anmeldenummer: 19701492.1
(22) Anmeldetag: 22.01.2019
(51) Int. Cl.: B60W 50/00, B60W 50/08, B60W 50/10

(54) **VERFAHREN ZUM AUSWÄHLEN EINES FAHRPROFILS EINES KRAFTWAGENS, FAHRASSISTENZSYSTEM UND KRAFTWAGEN**
METHOD FOR SELECTING A DRIVING PROFILE OF A MOTOR CAR, DRIVING ASSISTANCE SYSTEM AND MOTOR VEHICLE
PROCÉDÉ DE SÉLECTION D'UN PROFIL DE CONDUITE D'UN VÉHICULE AUTOMOBILE, SYSTÈME D'ASSISTANCE A LA CONDUITE ET VÉHICULE AUTOMOBILE

(30) Priorität: 12.02.2018 DE 102018202146
(43) Veröffentlichungstag der Anmeldung: 23.12.2020
(73) Patentinhaber: VOLKSWAGEN AKTIENGESELLSCHAFT, 38440 Wolfsburg (DE)
(72) Erfinder: GOHLKE, Julia, 38553 Wasbüttel (DE); HOCHREIN, Paul, 13585 Berlin Spandau (DE); SPAHR, Holger, 38102 Braunschweig (DE)
(86) Internationale Anmeldenummer: PCT/EP2019/051416
(87) Internationale Veröffentlichungsnummer: WO 2019/154615

(56) Entgegenhaltungen:
- EP-A1- 2 886 410
- WO-A1-2016/109540
- DE-A1-102014 215 258
- US-A1- 2010 023 223
- US-B1- 9 248 819

## Beschreibung

Die Erfindung betrifft ein Verfahren zum Auswählen eines Fahrprofils eines Kraftwagens oder für einen Kraftwagen, ein entsprechendes Fahrassistenzsystem und einen mit einem solchen Fahrassistenzsystem ausgestatteten Kraftwagen.

Grundsätzlich ist es bekannt, unterschiedliche Fahrprofile oder Fahrmodi in oder für Kraftwagen vorzusehen. Ein Fahrprofil in diesem Sinne ist oder umfasst dabei eine Menge von Parametern, Parameterwerten, Einstellungen und/oder Vorgaben, welche ein Betriebsverhalten des Kraftwagens insgesamt oder von Teilen des Kraftfahrzeugs beeinflussen oder bestimmen. Durch die Auswahl eines bestimmten Fahrprofils kann beispielsweise eine Steifigkeit oder Abstimmung eines Fahrwerks oder einer Dämpfungseinrichtung des Kraftwagens, dessen Beschleunigungs-, Brems-, Ansprech- und/oder Lenkverhalten, ein Kraftstoff- oder Energieverbrauch und/oder dergleichen mehr direkt oder indirekt beeinflusst oder eingestellt werden. Typische vorgegebene, also beispielsweise herstellerseitig definierte oder festgelegte, Fahrprofile sind beispielsweise unter den Bezeichnungen Comfort, Eco, Sport oder dergleichen bekannt.

Aus der US 9,248,819 B1, die zur Formulierung des Oberbegriffs von Patentanspruch 1 herangezogen wurde, ist ein Verfahren zum Anpassen eines Fahrzeugkomponenten-Steuerungssystems eines Fahrzeugs bekannt, einschließlich des Erzeugens eines Benutzerprofils mit einer Steuerung, das mindestens ein Leistungsmerkmal umfasst. Das Benutzerprofil wird auf einem Speichergerät gespeichert. Mindestens eine Fahrzeugsteuercharakteristik des Fahrzeugkomponenten-Steuerungssystems wird basierend auf der mindestens einen Leistungscharakteristik des Benutzerprofils angepasst.

Die WO 2016/109540 A1 betrifft Systeme und ein Verfahren zur Steuerung eines autonomen Fahrzeugs. Das Verfahren umfasst der Empfangen einer Profilauswahl mit einem elektronischen Prozessor des autonomen Fahrzeugs. Es umfasst ferner das Empfangen eines Treiberprofils mit einem elektronischen Prozessor, das mehrere Einstellungen basierend auf der Profilauswahl enthält. Es umfasst weiterhin, wenn das autonome Fahrzeug in einem autonomen Fahrmodus arbeitet, mit dem elektronischen Prozessor mindestens ein Fahrzeugsteuerungssystem des autonomen Fahrzeugs basierend auf mindestens einer der mehreren Einstellungen zu steuern. Das Verfahren umfasst schließlich das Bestimmen eines Fahrstils basierend auf Daten mit einem elektronischen Prozessor und das Anpassen mindestens einer der mehreren Einstellungen basierend auf dem Fahrstil.

Die EP 2 886 410 A1 beschreibt eine Fahrzeuggeschwindigkeitssteueranordnung, um die Fahrzeuggeschwindigkeit eines Host-Fahrzeugs zu steuern. Die Anordnung umfasst eine Verarbeitungseinheit, die angeordnet ist, um eine Position des Host-Fahrzeugs mit Daten zu vergleichen, die für die geografischen Straßensegmente repräsentativ sind, die in einer Datenbank enthalten sind, um aus der Datenbank ein aktuelles geografisches Straßensegment zu bestimmen. Die Verarbeitungseinheit ist ferner so angeordnet, dass sie historische Fahrzeuggeschwindigkeitsprofile verarbeitet, die dem aktuellen geografischen Straßensegment zugeordnet sind, um darauf ein Host-Fahrzeuggeschwindigkeitssteuersignal zu erzeugen.

Aus der US 2010/023223 A1 ist ein adaptives Fahrzeugsteuerungssystem bekannt, das den Fahrstil eines Fahrers anhand von charakteristischen Kurvenmanövern sowie Straßen- und Verkehrsbedingungen klassifiziert. Das System umfasst mehrere Fahrzeugsensoren, die verschiedene Fahrzeugparameter umfassen. Ein Manöveridentifikationsprozessor empfängt die Sensorsignale, um ein charakteristisches Manöver des Fahrzeugs zu identifizieren, und liefert ein Manöveridentifikationssignal des Manövers.

Die DE 10 2014 215 258 A1 beschreibt ein Verfahren und eine Vorrichtung zum automatischen Auswählen von Fahrmodi. Dabei wird ein bestimmter Fahrer oder ein bestimmter Fahrertyp ermittelt, für den dann ein Fahrprofil geladen wird, welches zur Beeinflussung des Fahrmodus ausgebildet ist. Es wird dann ein Fahrmodus unter Berücksichtigung des Fahrerprofils und von Fahrinformationen ausgewählt. Die einzelnen Fahrmodi sind dabei fest definiert und nicht vom Fahrer veränderbar.

Aus der US 2017 / 0 080 948 A1 ist zudem ein System zum Steuern eines Fahrzeugs bekannt. Dabei wird basierend auf Sensordaten eine Bewegung des Fahrzeugs bestimmt. Basierend auf der Bewegung des Fahrzeugs werden Charakteristika einer befahrenen Fahrbahnoberfläche oder eines Fahrverhaltens eines Nutzers des Fahrzeugs bestimmt. Darauf basierend wird dann ein Fahrmodus des Kraftfahrzeugs bestimmt, der mittels eines entsprechend eingerichteten Aktuators angewendet wird. Der Fahrmodus kann dabei automatisch ohne Überwachung durch den Nutzer eingestellt werden.

Bei derartigen Verfahren ist üblicherweise ein bestimmtes Regelwerk für das Auswählen des Fahrprofils oder Fahrmodus vorgegeben. Entsprechend verhalten sich solche Systeme oftmals für unterschiedliche Nutzer, also Fahrer des jeweiligen Fahrzeugs, in gleicher Weise. Alternativ ist aus dem Serienfahrzeugbau eine manuelle Auswahl eines bestimmten Fahrprofils oder Fahrmodus durch den jeweiligen Fahrer bekannt. Ein solches manuelles Auswählen oder Umschalten des Fahrprofils kann jedoch nachteilig einen reduzierten Komfort, eine zusätzliche Belastung oder Ablenkung des Fahrers und somit potentiell eine reduzierte Sicherheit beim Führen des Fahrzeugs mit sich bringen.

Aufgabe der vorliegenden Erfindung ist es, eine individualisierte automatische Fahrprofilauswahl zu ermöglichen.

Diese Aufgabe wird erfindungsgemäß durch die Gegenstände der unabhängigen Patentansprüche gelöst. Vorteilhafte Ausgestaltungen und Weiterbildungen der vorliegenden Erfindung sind in den abhängigen Patentansprüchen, in der Beschreibung und in den Zeichnungen angegeben.

Bei einem erfindungsgemäßen Verfahren zum Auswählen eines zu verwendenden Fahrprofils eines Kraftwagens wird das jeweils aktuell zu verwendende Fahrprofil mittels eines Fahrassistenzsystems des Kraftwagens situationsabhängig automatisch aus mehreren vorgegebenen Fahrprofilen ausgewählt. Die mehreren vorgegebenen Fahrprofile bestimmen dabei jeweils wenigstens eine Betriebseigenschaft oder ein Betriebsverhalten des Kraftwagens. Die vorgegebenen Fahrprofile können insbesondere einen Satz von mehreren Werten oder Einstellungen für Betriebsparameter und/oder funktionale Einrichtungen des Kraftwagens umfassen oder darstellen. Erfindungsgemäß wird bei dem Verfahren mittels des Fahrassistenzsystems automatisch anhand wenigstens einer durch einen Fahrer des Kraftwagens vorgenommenen Bedienhandlung des Kraftwagens eine Abweichung zwischen dem aktuell von dem Fahrer gewünschten und dem bis dahin verwendeten der mehreren vorgegebenen Fahrprofile erkannt. Nach dem Erkennen der Abweichung wird eine Abfrage an den Fahrer ausgegeben, ob die Abweichung für die aktuelle Situation oder Situationsart von dem Fahrassistenzsystem angelernt werden soll. Nach einer Bestätigung der Abfrage wird das Fahrassistenzsystem für die aktuelle Situation oder Situationsart gemäß dem aktuell von dem Fahrer gewünschten Fahrprofil in zumindest einem das Auswählen des zu verwendenden Fahrprofils beeinflussenden Parameter dahingehend angepasst, dass die Abweichung beim automatischen Auswählen des zu verwendenden Fahrprofils in zukünftigen Situationen, die der aktuellen Situation entsprechen, berücksichtigt. Mit anderen Worten wird also die aktuelle Situation automatisch erkannt, ermittelt oder bestimmt und das Fahrassistenzsystem, insbesondere ein Auswahlmechanismus oder Auswahlverfahren des Fahrassistenzsystems zum Auswählen des jeweils zu verwendenden Fahrprofils, in Abhängigkeit von der Bedienhandlung, also einem Verhalten des Fahrers, angepasst. Durch das Anpassen des Fahrassistenzsystems kann also eine Individualisierung des Auswählens des zu verwendenden Fahrprofils für den jeweiligen Fahrer realisiert werden. Das zukünftige automatische Auswählen des zu verwendenden Fahrprofils erfolgt dann durch das entsprechend angepasste oder individualisierte Fahrassistenzsystem.

Es ist also vorliegend ein iteratives, lernendes Verfahren und Fahrassistenzsystem vorgesehen. Im Laufe der Zeit passt sich das Fahrassistenzsystem an individuelle Verhaltensweisen oder Vorlieben des Fahrers an, sodass dann von dem Fahrassistenzsystem situationsabhängig automatisch ausgewählte Fahrprofile besonders genau einen Fahrerwunsch des jeweiligen Fahrers abbilden oder antizipieren. Durch die vorliegende Erfindung kann vorteilhaft nicht nur dem Fahrer ein verbessertes Fahrerlebnis oder Nutzungserlebnis des Kraftwagens geboten werden, sondern der Fahrer kann auch von ihn beanspruchenden und gegebenenfalls ablenkenden Maßnahmen, wie etwa einem manuellen Einstellen oder Umschalten des verwendeten oder zu verwendenden Fahrprofils, entlastet werden.

In der Praxis kommt es oftmals vor, dass Fahrer ein manuelles Auswählen oder Umschalten des Fahrprofils vernachlässigen, insbesondere wenn die Situation, für die ein anderes als das jeweils bisher verwendete Fahrprofil besser geeignet ist, in zeitlicher und/oder räumlicher Hinsicht nur relativ kurz ist. Eine relativ kurze Situation in diesem Sinne kann beispielsweise ein einzelnes Fahrmanöver, wie beispielsweise ein Überholvorgang, ein Durchfahren eines verkehrsberuhigten Bereiches von beispielsweise weniger als 1 km Länge und/oder innerhalb von weniger als zwei Minuten, oder dergleichen sein oder umfassen. Durch das automatische Auswählen des zu verwendenden Fahrprofils kann also vorteilhaft ein Potenzial des Kraftwagens bei Bedarf und im Durchschnitt besser ausgenutzt, ein Kraftstoff- oder Energieverbrauch des Kraftwagens verringert und gleichzeitig ein Frustrieren des Fahrers vermieden werden. Durch die so geförderte Akzeptanz der automatischen Fahrprofil-Auswahl und -Umschaltung wird also vorteilhaft mit höherer Wahrscheinlichkeit das gesamte Spektrum der vorgegebenen Fahrprofile situationsgerecht und gleichzeitig an den jeweiligen Fahrer angepasst genutzt oder verwendet.

Das erfindungsgemäße Verfahren kann als auswählbarer Betriebsmodus des Fahrassistenzsystems vorgesehen sein. Dieser Betriebsmodus, der auch als adaptives Fahrprofil bezeichnet werden kann, kann dabei alternativ zu einer manuellen, festen Auswahl oder Vorgabe eines einzelnen der übrigen vorgegebenen Fahrprofile dem Fahrer zur Auswahl gestellt werden. In diesem Betriebsmodus, das heißt also bei Auswahl oder Verwendung des adaptiven Fahrprofils, kann also automatisch entsprechend der aktuellen Situation zwischen den übrigen vorgegebenen Fahrprofilen ausgewählt und umgeschaltet werden.

Die aktuelle Situation kann im Sinne der vorliegenden Erfindung sowohl durch einen Zustand des Kraftwagens als auch durch eine Umgebung des Kraftwagens bestimmt oder charakterisiert sein. Der Zustand des Kraftwagens kann dabei durch Fahrzeugdaten oder Fahrzeugsignale bestimmt sein oder beschrieben werden. Zum Erkennen oder Bestimmen der aktuellen Situation können diese Daten oder Signale über einen Bus oder ein Bussystem, beispielsweise einen CAN-Bus des Kraftwagens, mittels eines Signalgebers, und/oder dergleichen dem Fahrassistenzsystem bereitgestellt werden. Die den Zustand des Kraftwagens betreffenden Fahrzeugdaten können beispielsweise eine Pedalstellung, einen Lenkwinkel, eine Quer- und/oder Längsbeschleunigung, einen Betriebszustand und/oder Parameterwert eines oder mehrerer anderer Assistenzsysteme des Kraftwagens, Befehle oder Steuersignale eines oder mehrerer Steuergeräte des Kraftwagens und/oder dergleichen mehr sein oder umfassen. Die Umgebung des Kraftwagens betreffende Umgebungsdaten, die zum Charakterisieren der aktuellen Situation verwendet werden, können beispielsweise eine Art oder Klasse einer aktuell befahrenen Straße, deren Zustand oder Qualität, Witterungsverhältnisse, eine Tageszeit, Sichtverhältnisse, eine für einen aktuell befahrenen Streckenabschnitt gültige zulässige Höchstgeschwindigkeit, einen Abstand des Kraftwagens zu einem oder mehreren anderen Verkehrsteilnehmern und/oder Hindernissen in der Umgebung des Kraftwagens, eine Verkehrsdichte auf einem von dem Kraftwagen befahrenen Streckenabschnitt und/oder dergleichen mehr umfassen oder beschreiben.

Zudem kann die aktuelle Situation auch durch Fahrerinformationen beschrieben oder charakterisiert sein oder werden. Die Fahrerinformationen können dabei Eigenschaften oder einen Zustand des Fahrers umfassen oder beschreiben, beispielsweise ein ermitteltes Reaktionsvermögen, einen Aufmerksamkeits- oder Müdigkeitszustand, einen ein durchschnittliches Fahrverhalten des Fahrers charakterisierenden Fahrertyp, eine Verwendung einer Sehhilfe oder einer Sonnenbrille und/oder dergleichen mehr.

Zusammenfassend kann die aktuelle Situation durch Situationsdaten beschrieben oder bestimmt sein, welche einige oder alle der zuvor genannten Daten, Datenarten oder Signale umfassen können. Eine zukünftige Situation kann dabei als der aktuellen Situation entsprechend charakterisiert oder bestimmt werden, wenn die die zukünftige Situation beschreibenden, dann gültigen Situationsdaten mit den die aktuelle Situation beschreibenden Situationsdaten zumindest in einem vorgegebenen Teil oder zu einem vorgegebenen Anteil übereinstimmen oder höchstens einen vorgegebenen Abstand oder Unterschied zu den Situationsdaten der aktuellen Situation aufweisen. Es kann dabei eine Anzahl von Parametern und/oder eine Auswahl von bestimmten Parametern der Situationsdaten beziehungsweise deren Werten vorgegeben sein, die übereinstimmen, also für die zukünftige Situation und die aktuelle Situation einander entsprechen müssen. Beispielsweise kann vorgegeben sein, dass eine zukünftige Situation nur dann als der aktuellen Situation entsprechend bewertet oder eingestuft werden kann, wenn in beiden Situationen das gleiche Fahrmanöver ausgeführt wird und/oder eine Straße der gleichen Art oder Klasse befahren wird und/oder sich die Geschwindigkeit des Kraftfahrzeugs in beiden Situationen im selben von mehreren vorgegebenen Intervallen bewegt. Weitere Parameter, wie beispielsweise eine Tageszeit, können beispielsweise für beide Situationen miteinander verglichen werden, um eine Wahrscheinlichkeit oder Konfidenz dafür zu ermitteln, dass die beiden Situationen einander entsprechen. Demnach kann also als Teil der Erfindung die Wahrscheinlichkeit und/oder Konfidenz dafür automatisch bestimmt werden, dass sich die beiden Situationen entsprechen. Es kann dafür ein Schwellenwert vorgegeben sein, sodass nur dann, wenn die Wahrscheinlichkeit oder Konfidenz zumindest dem vorgegebenen Schwellenwert entspricht, die beiden Situationen als einander entsprechend bewertet oder eingestuft werden.

Im Sinne der vorliegenden Erfindung meint das beim Erkennen der Abweichung bis dahin verwendete Fahrprofil dasjenige Fahrprofil, welches zeitlich unmittelbar vor oder bei dem Erkennen der Abweichung aktiv ist, also zuletzt ausgewählt wurde und zum Zeitpunkt des Erkennens der Abweichung verwendet wird. Das zu verwendende Fahrprofil meint dasjenige Fahrprofil, welches regelgemäß, also entsprechend dem Auswahlmechanismus des Fahrassistenzsystems, zum Zeitpunkt des Erkennens der Abweichung oder unmittelbar danach unter Berücksichtigung des Fahrerwunsches am besten von allen vorgegebenen Fahrprofilen geeignet ist, also jeweilige dann gültige situationsabhängige Anforderungen am besten erfüllt. Das zu verwendende Fahrprofil entspricht damit, zumindest idealerweise, dem tatsächlich vom Fahrer in der jeweiligen Situation gewünschten der vorgegebenen Fahrprofile. Nach dem Auswählen des zu verwendenden Fahrprofils kann dieses insbesondere als Teil des erfindungsgemäßen Verfahrens aktiviert, also auch tatsächlich für die aktuelle Situation verwendet werden. Das Umschalten von dem bis dahin verwendeten Fahrprofil auf das ausgewählte zu verwendende Fahrprofil kann also Teil des erfindungsgemäßen Verfahrens sein.

Eine Abweichung zwischen dem aktuell von dem Fahrer gewünschten und dem bis dahin verwendeten Fahrprofil meint, dass das von dem Fahrer gewünschte Fahrprofil verschieden ist von dem bis dahin verwendeten Fahrprofil, der Fahrer also ein anderes als das bis dahin verwendete Fahrprofil wünscht. Mit anderen Worten ist die Abweichung dann gegeben, wenn zum oder ab dem Zeitpunkt des Erkennens der Abweichung, also beispielsweise für ein aktuelles Manöver oder die aktuelle Situation, ein anderes der vorgegebenen Fahrprofile als das bis dahin verwendete Fahrprofil die mit dem jeweiligen Manöver oder der aktuellen Situation einhergehenden Anforderungen an den Kraftwagen besser erfüllt als das bis dahin verwendete Fahrprofil. Handelt es sich bei dem Manöver oder der Situation beispielsweise um einen Überholvorgang, so ist ein Fahrprofil, welches ein maximales Ansprech- oder Beschleunigungsvermögen des Kraftwagens bereitstellt, besser geeignet, erfüllt also die Anforderungen besser, als ein anderes Fahrprofil, welches beispielsweise ein geringeres Beschleunigungsvermögen und dafür einen reduzierten Kraftstoff- oder Energieverbrauch bereitstellt.

Verschiedene Betriebsparameter des Kraftwagens, die von den Fahrprofilen eingestellt oder beeinflusst werden, können dabei mit einer vorgegebenen Priorisierung oder Gewichtung versehen sein, die ihre Relevanz oder Wichtigkeit für verschiedene Fahrmanöver oder Situationen angibt. Ein Fahrprofil kann dann als die jeweiligen Anforderungen besser erfüllend eingestuft werden, wenn die von ihm bereitgestellten Parameterwerte für die Betriebsparameter des Kraftwagens eine größere Nähe oder Übereinstimmung zu den für das jeweilige Manöver oder die jeweilige Situation gemäß der vorgegebenen Gewichtung oder Priorisierung optimalen Parameterwerten aufweisen.

Zum Anlernen der erkannten Abweichung für die jeweilige Situation können die Situationsdaten und das vom Fahrer gewünschte, also das zu verwendende Fahrprofil als Eingangsdaten dem Fahrassistenzsystem, insbesondere einem Anpassungs- oder Lernmodul des Fahrassistenzsystems, bereitgestellt werden. Dieses kann diese Eingangsdaten dann derart verarbeiten, dass durch das Anpassen des zumindest einen das Auswählen des zu verwendenden Fahrprofils beeinflussenden Parameters des Fahrassistenzsystems, insbesondere dessen Auswahlmechanismus, also des Anpassungs- oder Lernmoduls, dieses für der aktuellen Situation entsprechende Situationen das vom Fahrer gewünschte, also das zu verwendende Fahrprofil mit höherer Wahrscheinlichkeit auswählt, stärker gewichtet und/oder automatisch auswählt. Insbesondere kann für das Anlernen eine Methode des maschinellen Lernens, bevorzugt ein neuronales Netz, verwendet werden.

Die Abfrage kann über ein Benutzerinterface des Fahrassistenzsystems oder des Kraftwagens an den Fahrer ausgegeben werden. Die Abfrage kann beispielsweise akustisch oder optisch, insbesondere grafisch, symbolbasiert oder als Text, etwa auf einem Bildschirm, dargestellt, also ausgegeben werden. Dazu kann beispielsweise ein Bordcomputer oder ein Infotainmentsystem des Kraftwagens, insbesondere mit einem Tasten- oder Bedienfeld, einem Touchscreen oder Touchpad oder dergleichen, verwendet werden. Die fahrerseitige Bestätigung der Abfrage kann über das gleiche oder ein anderes Benutzerinterface gegeben und von dem Fahrassistenzsystem empfangen werden. Der Fahrer kann die Bestätigung also beispielsweise als Sprachbefehl, durch einen Tastendruck oder durch Berühren des Touchscreens geben.

Die Abfrage und deren Bestätigen kann den Fahrer zwar initial belasten, vorteilhaft wird mittels der vorliegenden Erfindung jedoch erreicht, dass durch das Anlernen, also das Anpassen des Fahrassistenzsystems mit der Zeit, also mit zunehmender Nutzung des Fahrassistenzsystems durch den Fahrer, weniger häufig Abweichungen zwischen dem von dem Fahrer gewünschten und dem jeweils tatsächlich verwendeten Fahrprofil auftreten, da das Fahrassistenzsystem sich an den Fahrer anpasst, also dessen Wünsche oder Vorlieben lernt. Es ist dabei ein besonderer Vorteil der vorliegenden Erfindung, dass durch die Abfrage, also ein Einholen von Feedback des Fahrers, dieses Anpassen oder Lernen besonders effektiv erfolgen kann. Vorteilhaft führen beispielsweise Sonder- oder Einmalsituationen, in denen es zwar zu einer Abweichung kommt, der Fahrer die entsprechende Abfrage aber nicht bestätigt, nicht zu einer Veränderung oder Beeinflussung, also nicht zu einem Anpassen des Fahrassistenzsystems oder dessen Auswahlmechanismus. So kann vorteilhaft eine schnellere Konvergenz des Auswahlmechanismus des Fahrassistenzsystems hin zu dem vom Fahrer gewünschten Verhalten des Fahrassistenzsystems erfolgen. Außerdem wird dem Fahrer vorteilhaft eine Möglichkeit zur gezielten Beeinflussung des Verhaltens des Fahrassistenzsystems geboten. Gleichzeitig wird vermieden, dass der Fahrer in kritischen Situationen eventuell zögerlich reagiert aus der Befürchtung heraus, das Fahrassistenzsystem in ungewollter Weise zu beeinflussen, was ohne den Mechanismus der Abfrage und Bestätigung passieren könnte. Beispielsweise kann der Fahrer im Allgemeinen beim Durchfahren eines verkehrsberuhigten Bereiches eine Verwendung eines kraftstoffsparenden (ECO-) oder besonders komfortablen (Comfort-) Fahrprofils wünschen. Fährt der Fahrer dann, beispielsweise aufgrund eines unvorhergesehenen Termindrucks, in einem verkehrsberuhigten Bereich mit einem besonders aggressiven, also sportlichen Fahrstil oder wählt sogar manuell ein vorgegebenes sportliches Fahrprofil, so kann er die resultierende Abfrage des Fahrassistenzsystems verneinen oder ablehnen, also nicht bestätigen, und dadurch vorteilhaft vermeiden, dass das Fahrassistenzsystem lernt, in Zukunft in dem verkehrsberuhigten Bereich auf ein sportliches oder aggressives Fahrprofil mit hoher Fahrdynamik (Sport) zu wechseln oder umzuschalten.

Erfindungsgemäß wird durch Auswerten von eine jeweils aktuelle Fahrsituation charakterisierenden Situationsdaten - insbesondere der bereits erwähnten Situationsdaten - automatisch ein jeweils aktuelles Fahrmanöver erkannt. Bei mehreren gleichzeitig erkannten Fahrmanövern, denen jeweils eines der Fahrprofile vorgegeben, also in vorgegebener Art und Weise, zugeordnet ist, wählt das Fahrassistenzsystem das zu verwendende der Fahrprofile in Abhängigkeit von oder gemäß einer vorgegebenen Priorisierung der Fahrmanöver aus. Mit anderen Worten ist also eine Zuordnung zwischen Fahrmanövern und Fahrprofilen vorgesehen, sodass nach dem Erkennen eines bestimmten Fahrmanövers besonders schnell und aufwandsarm das diesem Fahrmanöver zugeordnete Fahrprofil als das zu verwendende Fahrprofil bestimmt werden kann. In einer komplexen Situation können jedoch mehrere unterschiedliche Fahrmanöver, denen insbesondere unterschiedliche Fahrprofile zugeordnet sein können, sich ganz oder teilweise überlappen. In einem solchen Fall wird dann dasjenige der den erkannten Fahrmanövern zugeordneten Fahrprofile ausgewählt, welches die höchste Priorisierung oder Priorität aufweist. Beispielsweise kann einem Fahren auf einer Landstraße das Comfort-Fahrprofil zugeordnet sein, während einem Überholmanöver das Sport-Fahrprofil zugeordnet sein kann. Bei einem auf einer Landstraße durchgeführten Überholmanöver würde es dann zu einem Konflikt kommen, da sowohl die Bedingung für das Auswählen des Comfort-Fahrprofils als auch die Bedingung für das Auswählen des Sport-Fahrprofils erfüllt ist. Um diesen Konflikt zu lösen, kann in diesem Beispiel etwa dem Sport-Fahrprofil eine höhere Priorisierung oder Priorität zugeordnet sein als dem Comfort-Fahrprofil, sodass für das Überholmanöver dann das Sport-Fahrprofil ausgewählt würde.

Zum Erkennen der Abweichung bestehen verschiedene Möglichkeiten. In vorteilhafter Ausgestaltung der vorliegenden Erfindung wird als die durch den Fahrer vorgenommene Bedienhandlung ein manuelles Auswählen eines der mehreren Fahrprofile ausgewertet. Wenn der Fahrer also für das aktuelle Fahrmanöver oder in der aktuellen Situation selbst manuell, also aktiv, ein anderes der vorgegebenen Fahrprofile als das bis dahin verwendete Fahrprofil wählt oder aktiviert, so kann dies als Wunsch des Fahrers interpretiert werden, dass für dieses Fahrmanöver oder für diese Situation oder dieser Situation entsprechende zukünftige Situationen die Verwendung des von ihm manuell ausgewählten Fahrprofils wünscht, also bevorzugt. Das Auswerten eines derartigen manuellen Auswählens eines Fahrprofils durch den Fahrer ist dabei besonders vorteilhaft, da eine Unsicherheit über das vom Fahrer gewünschte Fahrprofil entfällt, also vermieden werden kann. Damit kann vorteilhaft eine besonders genaue und zuverlässige Anpassung des Fahrassistenzsystems an den Fahrer oder dessen Vorlieben realisiert werden.

In vorteilhafter Weiterbildung der vorliegenden Erfindung wird als die durch den Fahrer vorgenommene Bedienhandlung ein von dem Fahrer durchgeführtes Fahrmanöver anhand von aktuellen Werten vorgegebener Parameter automatisch erkannt und ausgewertet. Mit anderen Worten ist die Bedienhandlung in diesem Fall also gleichzusetzen mit einem Bedienen oder Führen des Kraftwagens zum Ausführen des jeweiligen Fahrmanövers. Die Bedienhandlung kann dabei mehrere Bedienungen oder Bedienvorgänge, also Einzel- oder Teilhandlungen, ebenso wie kontinuierliche Handlungen oder Vorgänge umfassen. Beispielsweise kann die Bedienhandlung in diesem Sinne ein Betätigen, beispielsweise ein vollständiges Durchdrücken oder Durchtreten, eines Gaspedals umfassen. Ebenso kann die Bedienhandlung beispielsweise ein Betätigen eines Fahrtrichtungsanzeigers, also eines Blinkers, des Kraftwagens und ein Verändern des Lenkwinkels umfassen. Bereits hieraus kann das Fahrmanöver gegebenenfalls als Spurwechsel oder als Überholvorgang erkannt werden, wobei bevorzugt weitere Situationsdaten zum Erkennen des Fahrmanövers berücksichtigt, also ausgewertet werden können. Beispielsweise können Daten eines Assistenzsystems des Kraftwagens zur Fahrstreifenerkennung ebenso wie Positionsdaten von anderen Verkehrsteilnehmern in der Umgebung des Kraftwagens herangezogen, also berücksichtigt und ausgewertet werden. War bis dahin beispielsweise ein besonders kraftstoffsparendes Fahrprofil (ECO) ausgewählt, also aktiv, so kann als Abweichung erkannt werden, dass der Fahrer tatsächlich ein sportliches Fahrprofil mit einem demgegenüber erhöhten Beschleunigungsvermögen oder schnelleren Ansprechverhalten des Kraftwagens wünscht. In diesem Beispiel ist dies beispielsweise dadurch gerechtfertigt, dass das vollständige Durchdrücken des Gaspedals (Kickdown) mit einem minimalen Kraftstoffverbrauch nicht vereinbar ist, und aus höherer priorisierten Sicherheitsüberlegungen heraus ein möglichst schnelles Durchführen und Abschließen des Fahrmanövers, also des Überholvorgangs, zumindest mit höherer Wahrscheinlichkeit vom Fahrer gewünscht wird als ein minimaler Kraftstoffverbrauch, da der Fahrer ansonsten beispielsweise den Überholvorgang nicht eingeleitet hätte. In diesem Fall kann das ECO-Fahrprofil also die Anforderungen des aktuellen Fahrmanövers oder der aktuellen Situation, also des Überholvorgangs, weniger gut erfüllen, als das Sport-Fahrprofil.

In vorteilhafter Weiterbildung der vorliegenden Erfindung umfasst das Fahrassistenzsystem für das situationsabhängige Auswählen eines der mehreren Fahrprofile ein auf vorgegebenen Regeln basierendes Basismodul als Rückfallmechanismus und ein Lernmodul für das Anpassen des Fahrassistenzsystems. Durch das Basismodul werden zum Auswählen des Fahrprofils vorgegebene Arten von über ein Fahrzeugbussystem des Kraftwagens empfangenen Daten oder Datensignalen durch eine vorgegebene Regelmatrix verarbeitet. Das Lernmodul hingegen verarbeitet die Bedienhandlung und eine jeweils aktuelle Fahrsituation charakterisierende Situationsdaten - insbesondere die bereits erwähnten Situationsdaten - mittels einer Methode des maschinellen Lernens, insbesondere mittels wenigstens eines neuronalen Netzes. Durch diesen zweiteiligen Aufbau des Fahrassistenzsystems kann vorteilhaft sichergestellt werden, dass unabhängig von einer aktiven Nutzung des Fahrassistenzsystems durch den Fahrer das Fahrassistenzsystem stets seine Basisfunktionalität des situationsangepassten Auswählens eines geeigneten Fahrprofils erfüllen kann. Gleichzeitig können durch das maschinelle Lernen, insbesondere durch das neuronale Netz, auch komplexe Fahrmanöver und Situationen zuverlässig erkannt werden, da vergleichsweise einfach eine Vielzahl, gegebenenfalls auch unterschiedlicher, Daten, Datenarten oder Datensignale etwa ein entsprechend trainiertes neuronales Netz, verarbeitet werden können.

Beispielsweise ein neuronales Netz kann demgegenüber die Aufbereitung und Erkennung auch komplexer Kombinationen von Datensignalen einfacher bewerkstelligen. Dies ermöglicht es vorteilhaft, Fahrmanöver, Situationen und/oder ein Verhalten oder einen Wunsch des Fahrers genauer und zuverlässiger zu erkennen oder zu bewerten. Somit kann erreicht werden, dass das automatisch ausgewählte Fahrprofil noch besser zu der jeweiligen Situation passt. Ein weiterer Vorteil des zweiteiligen Aufbaus des Fahrassistenzsystems besteht darin, dass das Fahrassistenzsystem in einen Auslieferungszustand zurückgesetzt werden kann, wobei im Laufe der Zeit gelernte Anpassungen des Fahrassistenzsystems verworfen werden können. Durch die vorgegebene Regelmatrix kann das Fahrassistenzsystem seine Aufgabe dann weiterhin erfüllen und im Laufe der Zeit kann das Verhalten durch erneutes Anlernen und Anpassen des Fahrassistenzsystems - dann beispielsweise auf einen neuen Fahrer des Kraftwagens - erneut angepasst werden.

Für die vorliegende Erfindung können das Basismodul und das Lernmodul ebenso einzeln oder unabhängig voneinander verwendet werden. Es kann also anstelle beider Module ebenso nur das Basismodul oder nur das Lernmodul vorgesehen werden.

Erfindungsgemäß wird als Teil der jeweils aktuellen Situation automatisch eine zugehörige räumliche Position des Kraftwagens, an der es zu der Abweichung kam, erfasst. Auf die erste Bestätigung der Abfrage in dieser Situation hin wird das Fahrassistenzsystem zunächst nur für die individuelle erfasste Position angepasst. Mit anderen Worten gilt die Anpassung also dann nur für der aktuellen Situation entsprechende Situationen, die an der aktuell erfassten Position auftreten. Erst dann, wenn die Abweichung mehrfach für dieser Situation entsprechende Situationen an unterschiedlichen räumlichen Positionen erkannt und die entsprechenden jeweiligen Abfragen bestätigt wurden, wird das Fahrassistenzsystem positionsunabhängig für alle zukünftigen gleichartigen, also der jeweiligen Situation entsprechenden Situationen, entsprechend angepasst. Mit anderen Worten wird also berücksichtigt, ob der Fahrer das in der aktuellen Situation gewünschte Fahrprofil nur an einer bestimmten räumlichen Stelle, beispielsweise auf einem einzelnen Straßenabschnitt, oder verallgemeinert in allen entsprechenden Situationen auch an unterschiedlichen räumlichen Positionen, also auch dann, wenn sich der Kraftwagen auf einem anderen Streckenabschnitt bewegt, verwenden möchte. Hierdurch kann vorteilhaft eine verbesserte Individualisierung und eine größere Flexibilität des Fahrassistenzsystems und dessen Anpassung an den Fahrer erreicht werden. Beispielsweise kann der Fahrer für eine einzelne Kurve, beispielsweise auf einer Landstraße, dass sportliche Fahrprofil bevorzugen, während er aber im allgemeinen für andere Kurven auf Landstraßen das ECO- oder Comfort-Fahrprofil verwenden möchte. Diese verbesserte individualisierte Granularität beim automatischen Auswählen des zu verwendenden Fahrprofils durch das Fahrassistenzsystem ist also besonders vorteilhaft.

In vorteilhafter Weiterbildung der vorliegenden Erfindung bestimmt das Fahrassistenzsystem auf Basis von mehreren unterschiedlichen Datenquellen jeweils einen Profilkandidaten für das zu verwendende Fahrprofil. Aus diesen mehreren Profilkandidaten wählt das Fahrassistenzsystem dann in Abhängigkeit von einer vorgegebenen Priorisierung der Fahrprofile das zu verwendende Fahrprofil aus. Die mehreren unterschiedlichen Datenquellen können insbesondere Einrichtungen des Kraftwagens sein, welche unterschiedliche Teile der Situationsdaten bereitstellen. In einem solchen Fall könnte beispielsweise ein Auswerten von Umgebungsdaten, also von einer Umgebungssensorik des Kraftwagens als eine erste Datenquelle bereitgestellten Daten zum Bestimmen eines ersten Profilkandidaten führen. Dabei kann das Auswerten von Fahrzeugdaten, die beispielsweise einen Zustand des Kraftwagens betreffen und von einer zweiten Datenquelle bereitgestellt werden, zum Bestimmen eines anderen, zweiten Profilkandidaten führen. Beispielsweise könnte als erster Profilkandidat das Sport-Fahrprofil und als zweiter Profilkandidat das energiesparende ECO-Fahrprofil bestimmt werden. Weist dann beispielsweise das ECO-Fahrprofil eine höhere Priorisierung oder Priorität als das Sport-Fahrprofil auf, so würde dann der zweite der beiden Profilkandidaten als das tatsächlich zu verwendende Fahrprofil ausgewählt werden. Dies kann beispielsweise in einer Situation besonders vorteilhaft sein, in der äußere Gegebenheiten das Sport-Fahrprofil als am besten geeignet für die jeweilige Situation erscheinen lassen, während eine Berücksichtigung der Fahrzeugdaten, beispielsweise eines Ladezustandes einer Traktionsbatterie des Kraftwagens, das ECO-Fahrprofil am besten geeignet erscheinen lassen. Beispielsweise kann also das ECO-Fahrprofil dann höher priorisiert sein als das Sport-Fahrprofil, wenn anhand des aktuellen Ladezustandes, insbesondere unter Berücksichtigung einer aktuellen Position und/oder eines aktuellen Navigationsziels des Kraftwagens, ermittelt wird, dass bei Verwendung des Sport-Fahrprofils das Erreichen des Navigationsziels nicht garantiert werden kann.

Besonders bevorzugt kann also die Priorisierung der Fahrprofile automatisch dynamisch angepasst werden in Abhängigkeit von den Situationsdaten. Ebenso können beispielsweise ebenso Fahrerinformationen berücksichtigt werden. Beispielsweise kann eine Priorisierung des Sport-Fahrprofils in Abhängigkeit von dem Fahrerzustand, insbesondere dessen Aufmerksamkeit und/oder Müdigkeit, dynamisch angepasst werden, sodass mit abnehmender Aufmerksamkeit, also mit zunehmender Müdigkeit des Fahrers die Priorisierung des Sport-Fahrprofils reduziert wird. Hierdurch kann dann beispielsweise eine Sicherheit beim Führen des Kraftwagens erhöht werden.

In vorteilhafter Weiterbildung der vorliegenden Erfindung wird die Abfrage erst dann an den Fahrer ausgegeben, wenn in mehreren der aktuellen Situation entsprechenden Situationen die gleiche Abweichung erkannt worden ist. Mit anderen Worten wird also die Abfrage erst dann an den Fahrer ausgegeben, wenn er wiederholt in einander entsprechenden Situationen durch seine Bedienhandlungen zu erkennen gegeben hat, dass er ein anderes als das jeweils bis dahin verwendete Fahrprofil, insbesondere in diesen Situationen jeweils dasselbe Fahrprofil, wünscht. Hierdurch kann vorteilhaft eine Anzahl von an den Fahrer ausgegebenen Abfragen und somit dessen Belastung reduziert werden. Gleichzeitig kann vorteilhaft erreicht werden, dass auch ohne explizites Verneinen oder Ablehnen einer Anfrage Einzel- oder Sondersituationen, also Ausnahmefälle oder Ausnahmesituationen, nicht zum Anpassen des Fahrassistenzsystems angelernt werden. Da somit also nur wiederkehrende Verhaltensweisen oder Wünsche des Fahrers, die zudem über mehrere Situationen hinweg konstant oder konsistent sind, angelernt werden, kann auf diese Weise das Fahrassistenzsystem besonders genau, zuverlässig und robust an den jeweiligen Fahrer angepasst werden. Für diese Funktionalität kann das Fahrassistenzsystem einen entsprechenden Zwischenspeicher aufweisen.

In vorteilhafter Weiterbildung der vorliegenden Erfindung bestimmt das Fahrassistenzsystem automatisch einen Fahrertyp des Fahrers und ordnet dem Fahrer diesen für ihn bestimmten Fahrertyp zu. Aus den mehreren vorgegebenen Fahrprofilen bestimmt das Fahrassistenzsystem dann automatisch wenigstens ein zu dem bestimmten Fahrertyp nicht passendes Fahrprofil und verhindert oder beschränkt das automatische Auswählen des bestimmten, nicht zu dem Fahrertyp passenden Fahrprofils. Mit anderen Worten kann also für jedes der vorgegebenen Fahrprofile eine Differenz zwischen einem bei Verwendung des jeweiligen Fahrprofils resultierenden Fahrverhaltens des Kraftwagens und einem dem bestimmten Fahrertyp zugeordneten oder entsprechenden Fahrverhalten des Fahrers bestimmt werden. Als nicht zu dem bestimmten Fahrertyp passend kann ein Fahrprofil dann eingestuft werden, wenn diese Differenz einen vorgegebenen Schwellenwert überschreitet. Ebenso kann das Fahrprofil, für welches von allen vorgegebenen Fahrprofilen die größte Abweichung ermittelt wurde, als nicht zu dem bestimmten Fahrertyp passend eingestuft werden. Mögliche Fahrertypen sind beispielsweise ein sportlich-aggressiver Fahrertyp, ein vorsichtiger oder defensiver Fahrertyp, ein umweltbewusster oder kraftstoffsparender, also ökonomischer Fahrertyp oder dergleichen mehr. Wird für den Fahrer beispielsweise der sportlich-aggressive Fahrertyp bestimmt, so kann dann eine Wahrscheinlichkeit oder Häufigkeit reduziert werden, mit der etwa das kraftstoffsparende und eine reduzierte Fahrdynamik bewirkende ECO-Fahrprofil automatisch ausgewählt wird. Ebenso kann beispielsweise eine Priorisierung des als nicht zu dem Fahrertyp passend bestimmten Fahrprofils reduziert werden. Dadurch kann vorteilhaft das Verhalten des Fahrassistenzsystems weiter verbessert an den Fahrer angepasst, also individualisiert werden.

In vorteilhafter Weiterbildung der vorliegenden Erfindung gibt das Fahrassistenzsystem als Teil der Abfrage oder nach dem Bestätigen der Abfrage einen von dem Fahrassistenzsystem automatisch bestimmten Profilvorschlag für das in der aktuellen Situation oder dieser entsprechenden zukünftigen Situationen zu verwendende Fahrprofil an den Fahrer aus. Erst nach Bestätigung des Profilvorschlags wird das Fahrassistenzsystem dahingehend angepasst, dass zukünftig in der aktuellen Situation entsprechenden Situationen automatisch das dem bestätigten Profilvorschlag entsprechende der mehreren Fahrprofile ausgewählt wird. Mit anderen Worten wird dann also das Fahrassistenzsystem nicht in für den Fahrer und erkennbarer Art und Weise angepasst, sondern der Fahrer wird darüber informiert, welches Fahrprofil das Fahrassistenzsystem als das zu verwendende Fahrprofil bestimmt oder ausgewählt hat und dementsprechend auch in den entsprechenden zukünftigen Situationen automatisch bevorzugen oder auswählen würde. Der Profilvorschlag kann dabei bevorzugt auch eine Kurzbeschreibung oder Charakterisierung der automatisch erkannten Situation oder Situationsart oder des erkannten Manövers umfassen. Insgesamt wird dem Fahrer somit vorteilhaft eine verbesserte Anpassung oder Individualisierung des Fahrassistenzsystems mit höherer Granularität ermöglicht.

Insbesondere kann ein neuronales Netz des Fahrassistenzsystems aus Umgebungsdaten, Fahrzeugdaten, Fahrerinformationen und Bedienhandlungen des Fahrers ein Umschaltverhalten des Fahrers zwischen verschiedenen vorgegebenen Fahrprofilen lernen und dann in entsprechenden Situationen dem Fahrer einen Wechsel auf ein bestimmtes, anhand von gelerntem Verhalten automatisch ermitteltes Fahrprofil vorschlagen.

In vorteilhafter Weiterbildung der vorliegenden Erfindung wird der jeweilige Fahrer automatisch identifiziert und es wird für jeden unterschiedlichen identifizierten Fahrer ein persönliches Profil angelegt, das die von dem jeweiligen Fahrer veranlassten individuellen Anpassungen des Fahrassistenzsystems enthält. Die Anpassungen werden dabei durch Bestätigen von Abfragen durch den Fahrer veranlasst. Nach dem jeweiligen Anpassen des Fahrassistenzsystems und einer entsprechenden Aktualisierung des jeweiligen persönlichen Profils wird dieses über eine, insbesondere kabellose, Datenverbindung automatisch an eine fahrzeugexterne Servereinrichtung übermittelt. Nach einer Inbetriebnahme des Fahrassistenzsystems oder des Kraftwagens wird das aktualisierte persönliche Profil für den jeweils identifizierten Fahrer über die Datenverbindung automatisch von der Servereinrichtung abgerufen und von dem Fahrassistenzsystem des Kraftwagens verwendet. Mit anderen Worten wird also durch die Speicherung oder Zwischenspeicherung des individuellen persönlichen Profils in der fahrzeugexternen Servereinrichtung eine fahrzeugübergreifende Personalisierung oder Individualisierung für den Fahrer ermöglicht. Mit anderen Worten kann das persönliche Profil des Fahrers also über die fahrzeugexterne Servereinrichtung zwischen mehreren Kraftwagen übertragen werden, sodass der Fahrer unabhängig davon, welchen Kraftwagen er nutzt, stets einen an seiner individuellen Vorlieben angepasstes Fahrassistenzsystem vorfinden, also nutzen kann. Die fahrzeugexterne Servereinrichtung dient also als Backend und kann beispielsweise ein Cloud-Server sein oder einen solchen umfassen.

Außer dem erfindungsgemäßen Verfahren ist ein weiterer Aspekt der vorliegenden Erfindung ein Fahrassistenzsystem für einen Kraftwagen, welches eine Datenverarbeitungseinrichtung mit einer Schnittstelle zum Empfangen von von dem Kraftwagen bereitgestellten, eine jeweils aktuelle Situation charakterisierenden Datensignalen oder Situationsdaten und ein Benutzerinterface aufweist. Das erfindungsgemäße Fahrassistenzsystem ist dazu eingerichtet, zumindest eine Variante oder Ausführungsform des erfindungsgemäßen Verfahrens aus- oder durchzuführen. Dazu weist das erfindungsgemäße Fahrassistenzsystem eine Speichereinrichtung mit einem das Verfahren repräsentierenden oder kodierenden und mittels der Datenverarbeitungseinrichtung ausführbaren Programmcode auf. Die Datenverarbeitungseinrichtung kann dazu insbesondere eine Prozessoreinrichtung (CPU), einen Mikrocontroller oder dergleichen aufweisen. Das erfindungsgemäße Fahrassistenzsystem kann also insbesondere das im Zusammenhang mit dem erfindungsgemäßen Verfahren genannte Fahrassistenzsystem sein. Dementsprechend kann auch das Benutzerinterface des erfindungsgemäßen Fahrassistenzsystems insbesondere zum Ausgeben der Abfrage an den Fahrer des Kraftwagens und zum Empfangen der Bestätigung der Abfrage eingerichtet sein. Das Fahrassistenzsystem kann insbesondere dazu eingerichtet, also ausgebildet sein, über die Schnittstelle an ein Fahrzeugbussystem des Kraftwagens angeschlossen zu werden, also über die Schnittstelle Bussignale zu empfangen. Zusätzlich oder alternativ kann das erfindungsgemäße Fahrassistenzsystem eine Sensorik zur Umgebungserfassung, also zum Erfassen der genannten Umgebungsdaten, zum Erfassen eines Zustands des Kraftwagens, also zum Erfassen der genannten Fahrzeugdaten, und/oder zum Erfassen eines Zustands des Fahrers, also zum Erfassen der genannten Fahrerinformationen, umfassen.

Ein weiterer Aspekt der vorliegenden Erfindung ist ein Kraftwagen mit einer Sensorik zur Umgebungserfassung und mit einem Bussystem zum Bereitstellen von eine jeweils aktuelle Situation charakterisierenden Datensignalen der Sensorik, also Situationsdaten, an ein Fahrassistenzsystem des Kraftwagens. Erfindungsgemäß ist das Fahrassistenzsystem des Kraftwagens dabei ein an das Bussystem angeschlossenes Fahrassistenzsystem gemäß der vorliegenden Erfindung. Dementsprechend kann also der erfindungsgemäße Kraftwagen insbesondere der im Zusammenhang mit dem erfindungsgemäßen Verfahren und dem erfindungsgemäßen Fahrassistenzsystem genannte Kraftwagen sein.

In vorteilhafter Weiterbildung der vorliegenden Erfindung ist der Kraftwagen, insbesondere dessen Fahrassistenzsystem, eingerichtet für eine manuelle Veränderung oder Veränderbarkeit einer Zuordnung zwischen vorgegebenen Fahrmanövern und den mehreren vorgegebenen Fahrprofilen durch den Fahrer über ein Benutzerinterface. Insbesondere kann der Kraftwagen oder das Fahrassistenzsystem dabei auch zum Erkennen von Fahrmanövern, beispielsweise anhand von Sensor- und/oder Steuergerätedaten, des Kraftwagens eingerichtet sein. Durch eine derartige individuell anpassbare Zuordnung kann das Verhalten des Fahrassistenzsystems vorteilhaft besser individualisiert, also an den jeweiligen Fahrer und dessen Vorlieben angepasst werden. Durch die Möglichkeit zur Veränderung oder Anpassung der Zuordnung über das Benutzerinterface kann diese Individualisierung oder Anpassung insbesondere schneller und zuverlässiger realisiert oder voreingestellt werden als allein auf Basis des Anlernens der Abweichungen und das entsprechende automatische, also selbsttätige Anpassen des Fahrassistenzsystems. Beispielsweise kann das Fahrassistenzsystem oder das Benutzerinterface ein zusätzliches Menü aufweisen, das es dem Fahrer ermöglicht, selbst zu entscheiden, welches Fahrprofil er für welches Fahrmanöver verwenden möchte. So kann der Fahrer beispielsweise festlegen, ob bei einer erkannten Landstraßenfahrt etwa das ECO-, das Comfort- oder das Sport-Fahrprofil zu verwenden ist.

Zu der Erfindung gehören auch Weiterbildungen des erfindungsgemäßen Fahrassistenzsystems und des erfindungsgemäßen Kraftwagens, die Merkmale aufweisen, wie sie bereits im Zusammenhang mit den Weiterbildungen des erfindungsgemäßen Verfahrens beschrieben worden sind und umgekehrt. Aus diesem Grund sind die entsprechenden Weiterbildungen hier nicht noch einmal redundant für alle Aspekte der Erfindung beschrieben.

Im Folgenden ist ein Ausführungsbeispiel der Erfindung beschrieben. Hierzu zeigt:
- Fig. 1: eine schematische geschnittene Seitenansicht eines Kraftwagens mit einem Fahrassistenzsystem zum Auswählen eines zu verwendenden Fahrprofils;
- Fig. 2: ein Schema zur Veranschaulichung eines Verfahrens und Fahrassistenzsystems zum Auswählen eines zu verwendenden Fahrprofils und zum Anpassen des Fahrassistenzsystems; und
- Fig. 3: ein Schema zur Veranschaulichung der Ermittlung des zu verwendenden Fahrprofils als Teil des Schemas aus Fig. 2.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

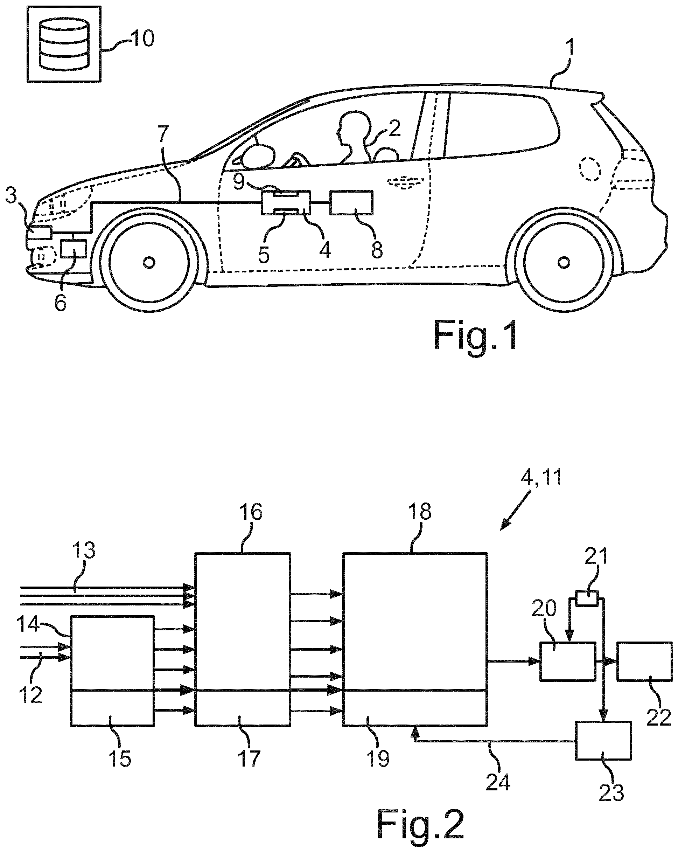

Fig. 1 zeigt eine schematische geschnittene Seitenansicht eines Kraftwagens 1, welcher von einem Fahrer 2 geführt wird. Der Kraftwagen 1 weist eine Sensorik 3 zumindest zur Umgebungserfassung, also zur Erfassung einer Umgebung des Kraftwagens 1 auf. Ebenso kann die Sensorik 3 einen Zustand oder eine Betriebseigenschaft, beispielsweise charakterisiert durch einen oder mehrere Parameterwerte, des Kraftwagens 1 und einen Zustand des Fahrers 2 erfassen. Dazu kann die Sensorik 3 mehrere unterschiedliche Sensoren, insbesondere wenigstens eine Kamera, umfassen. Weiterhin weist der Kraftwagen 1 ein Fahrassistenzsystem 4 zum Auswählen eines zu verwendenden Fahrprofils für den Kraftwagen 1 auf. Das Fahrassistenzsystem 4 umfasst einen Speicher 5, in dem unter anderem mehrere verschiedene vorgegebene Fahrprofile gespeichert sind. Die verschiedenen Fahrprofile können dabei unterschiedliche Einstellungen für mehrere funktionale Teile oder Systeme des Kraftwagens 1, vorliegend beispielsweise für eine Fahrzeugeinrichtung 6, umfassen. Die Fahrzeugeinrichtung 6 kann beispielsweise ein Steuergerät, ein Motor, eine Bremsanlage, ein Getriebe, ein Fahrwerk, ein anderes Assistenzsystem und/oder dergleichen mehr des Kraftwagens 1 sein oder umfassen. Die Sensorik 3, das Fahrassistenzsystem 4 und die Fahrzeugeinrichtung 6 sind vorliegend durch ein Bussystem 7 des Kraftwagens 1 miteinander verbunden. Über das Bussystem 7 können Daten, Datensignale, Steuerbefehle und dergleichen übermittelt oder ausgetauscht werden.

Das Fahrassistenzsystem 4 ist vorliegend zu dem mit einem Benutzerinterface 8 verbunden, über welches Ausgaben an den Fahrer 2 erfolgen und Eingaben des Fahrers 2 empfangen werden können. Darüber hinaus weist das Fahrassistenzsystem 4 ein Kommunikationsmodul 9 zur Kommunikation, insbesondere zum bidirektionalen Datenaustausch, mit einer hier ebenfalls schematisch dargestellten fahrzeugexternen Servereinrichtung 10 auf.

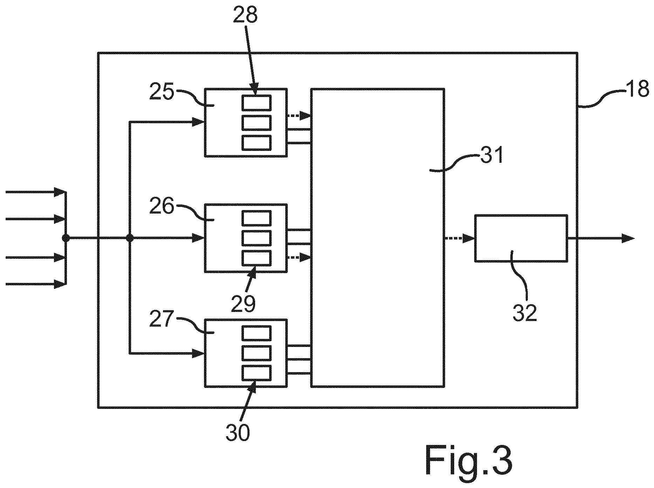

Fig. 2 zeigt ein Schema 11 eines Verfahrens zum Auswählen eines zu verwendenden Fahrprofils beziehungsweise des Fahrassistenzsystems 4 oder dessen Funktionsweise. Das Schema 11 soll im Folgenden unter Bezugnahme auf Fig. 1 und auf Fig. 3 erläutert werden. Fig. 3 zeigt dabei einen Teil des Schemas 11 in einer detaillierteren schematischen Darstellung.

Grundsätzlich kann der Fahrer 2 über das Bedien- oder Benutzerinterface 8 manuell zwischen den verschiedenen vorgegebenen Fahrprofilen auswählen, beispielsweise über ein haptisches Bedienelement oder ein Touchdisplay-Bedienelement eines Infotainmentsystems des Kraftwagens 1. Vorliegend soll jedoch zusätzlich eine Möglichkeit zur automatischen und dynamischen Auswahl eines situationsabhängig geeigneten Fahrprofils durch das Fahrassistenzsystem 4 geboten werden. Dazu wird vorliegend ein zusätzliches adaptives Fahrprofil eingeführt oder bereitgestellt, bei dessen Auswahl oder Verwendung das Fahrassistenzsystem 4 automatisch zwischen den übrigen vorgegebenen Fahrprofilen umschaltet. Das Umschalten erfolgt dabei in Abhängigkeit von eine jeweils aktuelle Situation charakterisierenden Situationsdaten, also beispielsweise der aktuellen Fahrsituation, der Umgebung, beispielsweise des Straßenzustands und der Witterung, einem Fahrertyp und/oder einem Fahrstil des Fahrers 2 oder ähnlichem. Hierdurch kann der Fahrer 2 entlastet und gleichzeitig vorteilhaft sein Fahrerlebnis intensiviert oder verbessert werden.

Von der Sensorik 3 werden Umgebungsdaten 12 und den Zustand oder eine oder mehrere Eigenschaften des Kraftwagens 1 beschreibende Fahrzeugdaten 13 über das Bussystem 7 dem Fahrassistenzsystem 4 bereitgestellt. Die Umgebungsdaten 12 gelangen zu einer Aufbereitung 14, wo auch eine Granularisierung erfolgt. Die Fahrzeugdaten 13 und die aufbereiteten Umgebungsdaten 12 werden dann von einem Algorithmus des Fahrassistenzsystems 4 für eine Vorverarbeitung 16 eingelesen. Die Vorverarbeitung 16 kann beispielsweise eine Filterung, eine Datenfusion, eine Entprellung und dergleichen mehr umfassen. Welche Umgebungsdaten 12 und welche Fahrzeugdaten 13 eingelesen und verarbeitet werden, kann dabei fest vorgegeben sein. Ebenso können die Umgebungsdaten 12 und/oder die Fahrzeugdaten 13 beispielsweise abhängig von der aktuellen Situation oder beispielsweise in Abhängigkeit von einem aktuellen Fahrmanöver des Kraftwagens 1 beziehungsweise des Fahrers 2 ausgewählt und/oder verarbeitet beziehungsweise vorverarbeitet werden. Die Umgebungsdaten 12 und die Fahrzeugdaten 13 können zusammengefasst als die Situationsdaten bezeichnet werden. Diese Situationsdaten können beispielsweise eine Stellung eines Pedals des Kraftwagens 1 ebenso wie straßenspezifische Daten, beispielsweise von einer automatischen Verkehrszeichenerkennung, Fahrzeugpositionsdaten, also eine Position des Kraftwagens, eine Art oder Klasse einer aktuell befahrenen Straße und dergleichen, und den Fahrer 2 betreffende oder beschreibende Fahrerinformationen, beispielsweise bezüglich einer Fahreragilität oder eines Müdigkeitsstatus des Fahrers 2, umfassen.

Vorliegend umfasst die Sensorik 3 mindestens eine Kamera, sodass die Situationsdaten Kameradaten 15 umfassen. Vorliegend werden die Kameradaten 15 als Eingangsdaten einem ersten neuronalen Netz 17 bereitgestellt. Das erste neuronale Netz 17 kann vorteilhaft die Aufbereitung und Erkennung komplexer Kombinationen von über das Bussystem 7 bereitgestellten Fahrzeugbussignalen, insbesondere von einigen oder allen der Situationsdaten, bewerkstelligen. Das erste neuronale Netz 17 kann also die Kameradaten 15, gegebenenfalls in Kombination mit einigen oder allen der übrigen Situationsdaten, bearbeiten, insbesondere zur - zumindest teilweisen oder vorläufigen - Erkennung oder Charakterisierung der aktuellen Situation. Das erste neuronale Netz 17 kann insbesondere entsprechend trainiert sein, um anhand der Kameradaten 15 die Umgebung zu charakterisieren, beispielsweise einen Straßentyp und/oder eine Qualität oder Beschaffenheit der Straße zu bestimmen.

Von der Vorverarbeitung 16 und dem ersten neuronalen Netz 17 bereitgestellte Ausgangsdaten werden anschließend einer Fahrprofilauswahl 18 und einem zweiten neuronalen Netz 19 bereitgestellt. Die Fahrprofilauswahl 18 umfasst dabei eine auf den bereitgestellten Daten basierende, also parametergesteuerte, Manövererkennung, also eine Erkennung oder Bestimmung des aktuell durchgeführten Fahrmanövers. Ein Manöver oder Fahrmanöver stellt in diesem Zusammenhang eine Kombination mehrerer Fahrzeugbussignale oder Situationsdaten dar, die gemeinsam eine vordefinierte oder vorgegebene Fahrsituation definieren oder beschreiben. Die Fahrsituation - oder kurz Situation - kann beispielsweise beschrieben sein durch eine Kombination eines statischen Aspekts, wie beispielsweise einer Landstraßenfahrt, eines dynamischen Aspekts, beispielsweise eines Überholvorgangs, eines Ortsinformation, beispielsweise eines Aufenthalts des Kraftwagens 1 im Bereich einer Ortschaft mit reduziertem Tempolimit, und einer Fahrerbeschreibung oder -information.

Die Fahrprofilauswahl 18 umfasst vorliegend weiterhin eine Manöverpriorisierung, eine Profilzuordnung zwischen Fahrmanövern und Fahrprofilen und eine Fahrertypisierung.

Mittels des zweiten neuronalen Netzes 19 kann ein Fahrertyp des Fahrers 2 erkannt und diesem zugeordnet werden. Dazu kann berücksichtigt oder ausgewertet werden, welche Fahrmanöver oder sonstige Bedienhandlungen der Fahrer 2 in welcher (Fahr-)Situation durchführt. Eine indirekte Fahrertypisierung unter alleiniger Verwendung der Situationsdaten und/oder sonstiger Fahrzeugbus Signale durch fest vorgegebene Regeln weist eine erhebliche Unschärfe und Manöverabhängigkeit auf. Eine Schwierigkeit besteht dabei darin, zu unterscheiden, ob ein Fahrverhalten des Fahrers 2 in einer Situation dem allgemeingültigen Fahrstil oder Fahrertyp des Fahrers 2 oder allein der jeweiligen Situation geschuldet ist. Ebenso kann dabei eine kundenerlebbare Reproduzierbarkeit verringert werden, da sich der Kraftwagen 1 abhängig von dem jeweils erkannten oder bestimmten Fahrertyp bei einem Manöver, also in einer Situation, unterschiedlich verhalten kann.

Entsprechende Fehlerquoten können durch die Nutzung des zweiten neuronalen Netzes 19 vorteilhaft verringert werden.

Die Fahrzeugdaten 13 umfassen insbesondere eine von dem Fahrer 2 vorgenommene Bedienhandlung, beispielsweise ein manuelles Auswählen oder Aktivieren eines der vorgegebenen Fahrprofile. Das zweite neuronale Netz 19 kann anhand von von dem Fahrer 2 vorgenommenen Bedienhandlungen, insbesondere unter Berücksichtigung der übrigen Situationsdaten, also etwa der Umgebungsdaten 12, der Fahrzeugdaten 13, der Fahrer Informationen, etc. ein Verhalten, insbesondere ein manuelles Umschaltverhalten zwischen verschiedenen Fahrprofilen, des Fahrers 2 lernen. Das zweite neuronale Netz 19 lernt also das Verhalten oder Fahrverhalten des Fahrers 2.

In Fig. 3 sind als Teil der Fahrprofilauswahl 18 schematisch und beispielhaft ein Comfort-Fahrprofil 25, ein ECO-Fahrprofil 26 und ein Sport-Fahrprofil 27 dargestellt. Dem Comfort-Fahrprofil 25 sind dabei mehrere Manöver 28 zugeordnet. Dem ECO Fahrprofil 26 sind mehrere Manöver 29 zugeordnet. Dem Sport-Fahrprofil 27 sind mehrere Manöver 30 zugeordnet. Da gleichzeitig oder einander überlagernd oder überlappend mehrere Manöver erkannt werden können, und daraus ebenso wie aus weiteren Teilen der verarbeiteten Situationsdaten unterschiedliche Kandidaten für ein zu verwendendes Fahrprofil für die aktuelle Situation resultieren können, ist weiterhin als Teil der Profilauswahl 18 eine Priorisierung 31 vorgesehen. Über die Priorisierung 31 werden die verschiedenen Fahrmanöver 28, 29, 30, Fahrprofile 25, 26, 27 und Profilkandidaten priorisiert oder zusammengeführt. Im Ergebnis wird dann eines der vorgegebenen Fahrprofile 25, 26, 27 als zu verwendendes Fahrprofil 32 ausgewählt. Ein dabei verwendeter Zuordnungsalgorithmus kann mit einer Fahrerpersonalisierung gekoppelt werden. Es können also persönliche Einstellungen oder Vorgaben des Fahrers 2 berücksichtigt werden. Beispielsweise kann ein Auswählen eines nicht zu dem für den Fahrer 2 bestimmten Fahrertyp oder Fahrstil passenden Fahrprofils 25, 26, 27 verhindert oder begrenzt werden. Beispielsweise würde damit einem sportlichen Fahrer eine verminderte Verfügbarkeit des Eco-Profils 26 geboten werden oder umgekehrt. Ebenso kann für eine optimale Individualisierbarkeit der Fahrprofilauswahl 18 und damit des Fahrerlebnisses eine von dem Fahrer 2 anpassbare Manöverzuordnung zwischen den vorgegebenen Fahrprofilen 25, 26, 27 und den Manövern 28, 29, 30 berücksichtigt werden.

Als Teil der Fahrprofilauswahl 18 kann ebenso ein persönliches Profil des Fahrers 2 berücksichtigt werden, welches auf die fahrzeugexterne Servereinrichtung 10 hochgeladen und von dieser automatisch abgerufen werden kann. Der Fahrer 2 kann also stets seine für ihn individualisierten oder personalisierten, insbesondere gelernten, Einstellungen und Anpassungen wiederbekommen - insbesondere unabhängig davon, ob er den Kraftwagen 1 oder ein anderes Fahrzeug nutzt.

Für die Fahrprofilauswahl 18 kann eine Regelmatrix vorgegeben sein. Die in dem Kraftwagen 1 verfügbaren Daten und Informationen können dann durch die Regelmatrix in bekannter, reproduzierbarer und deterministischer Weise verarbeitet werden, um etwa das aktuelle Fahrmanöver zu erkennen und/oder letztlich eine gezielte Auswahl des zu verwendenden Fahrprofils 32 herbeizuführen. Über die Fahrsituations- und Fahrstilerkennung kann das für den individuellen Fahrer 2 geeignetste der vorgegebenen Fahrprofile 25, 26, 27 ausgewählt werden.

Die Manöver 28, 29, 30 haben eine zugewiesene Priorität, um beim gleichzeitigen Erkennen von mehreren der Manöver 28, 29, 30 automatisch eine eindeutige Entscheidung über die Profilauswahl 18 treffen zu können. Jedem der Manöver 28, 29, 30 ist ein Zielprofil, also eines der Fahrprofile 25, 26, 27 zugewiesen, sodass, sofern nicht bereits das gleiche oder das höchst priorisierte Manöver 28, 29, 30 oder Fahrprofil 25, 26, 27 aktiv ist, eine entsprechende Profilauswahl- oder Profiländerungsaufforderung an einen automatischen Fahrprofilkoordinator als Teil der Fahrprofilauswahl 18 gesendet wird.

Innerhalb oder als Teil der Regelmatrix kann eine Parametrisierung, beispielsweise von Grenz- oder Schwellenwerten vorgegeben sein, die die jeweilige Priorität oder Priorisierung 31 der Manöver 28, 29, 30 und die Manöver-Fahrprofil-Zuordnung zwischen den vorgegebenen Fahrprofilen 25, 26, 27 und den Manövern 28, 29, 30 beeinflussen. Diese Parametrierung beziehungsweise die Grenz- oder Schwellenwerte können über eine entsprechende Anpassung eines Steuergerätedatensatzes des Fahrassistenzsystems 4 modifiziert werden.

Nachdem das zu verwendende Fahrprofil 32, gegebenenfalls unter Berücksichtigung einer Gewichtung, bestimmt oder ausgewählt worden ist, erfolgt ein Vergleich oder Abgleich 20 des ausgewählten zu verwendenden Fahrprofils 32 mit einem bis dahin verwendeten aktuellen Fahrprofil 21. Unterscheidet sich das zu verwendende Fahrprofil 32 von dem bis dahin verwendeten aktuellen Fahrprofil 21, wurde also eine entsprechende Abweichung zwischen dem zu verwendenden Fahrprofil 32 und dem bis dahin verwendeten aktuellen Fahrprofil 21 erkannt, so erfolgt anschließend ein automatisches Umschalten 22 auf das zu verwendende Fahrprofil 32. Das zu verwendende Fahrprofil 32 entspricht dabei dem von dem Fahrer 2 in der aktuellen Situation gewünschten Fahrprofil oder wird zumindest dahingehend interpretiert.

Eine Wahrnehmbarkeit der Profilumschaltung, also des Umschaltens 22, für den Fahrer 2 kann auf verschiedene Arten realisiert werden. Beispielsweise in Form einer Visualisierung der automatischen Profilumschaltung über eine permanente Angabe oder Anzeige des aktuell verwendeten Fahrprofils in einem Kombiinstrument des Kraftwagens 1. Das automatische Umschalten 22 des aktuellen Fahrprofils 21 auf das ausgewählte zu verwendende Fahrprofil 32 kann also in dem Kombiinstrument des Kraftwagens 1 angezeigt werden. Dabei kann stets das jeweils aktive Fahrprofil 25, 26, 27 angezeigt werden. Ebenso kann aber beispielsweise bei Verwendung der entsprechenden Funktionalität der automatischen Profilauswahl 18 und des automatischen Umschaltens 22 dauerhaft angezeigt werden, dass das adaptive Fahrprofil verwendet wird. Zusätzlich oder alternativ kann das Umschalten 22, also ein automatischer Wechsel des Fahrprofils angezeigt werden, beispielsweise als Popup-Meldung im Kombiinstrument.

Zusätzlich kann entsprechend, also in Abhängigkeit von dem automatisch ausgewählten Fahrprofil 25, 26, 27 - je nach Verfügbarkeit der entsprechenden Funktionalität in dem Kraftwagen 1 oder der entsprechenden Daten über das Bussystem 7 - etwa eine Ambientebeleuchtung, eine Pedalkennlinie, eine Dämpferkennlinie und/oder dergleichen mehr umgeschaltet, eingestellt oder angepasst werden. Auch hierdurch kann vorteilhaft die Wahrnehmbarkeit der Profilumschaltung oder des jeweils aktuell verwendeten Fahrprofils 25, 26, 27 erreicht werden - sei es rein visuell und/oder durch ein verändertes Fahrverhalten des Kraftwagens 1.

Weiterhin wird eine Abfrage 23 an den Fahrer 2 ausgegeben, mit der abgefragt wird, ob die erkannte Abweichung zwischen dem zu verwendenden Fahrprofil 32 und dem bis dahin verwendeten aktuellen Fahrprofil 21 für die aktuelle Situation oder Situationsart von dem Fahrassistenzsystem 4 angelernt werden soll. Die Abfrage 23 kann bei jeder erkannten Abweichung oder beispielsweise erst dann an den Fahrer 2 ausgegeben werden, wenn eine bestimmte Bedingung erfüllt ist. Beispielsweise kann die Abfrage 23 nur dann an den Fahrer 2 ausgegeben werden, wenn die Abweichung in wiederkehrenden Situationen erkannt wird. Zudem kann die Abfrage 23 das automatisch ausgewählte zu verwendende Fahrprofil 32 als Profilvorschlag umfassen, den der Fahrer 2 dann bestätigen muss. Bestätigt der Fahrer 2 die Abfrage 23, erfolgt automatisch ein Anpassen 24 des Fahrassistenzsystems für die aktuelle Situation gemäß dem aktuell von dem Fahrer gewünschten, also dem zu verwendenden Fahrprofil 32 in zumindest einem die Fahrprofilauswahl 18 beeinflussenden Parameter dahingehend, dass diese Abweichung beim automatischen Auswählen des zu verwendenden Fahrprofils 32 in zukünftigen Situationen, die der aktuellen Situation entsprechen, berücksichtigt wird.

Es erfolgt hier also nicht nur eine intelligente, situationsabhängige Auswahl und Umschaltung des Fahrprofils für den Kraftwagen 1, sondern es wird gegebenenfalls auch ein Fahrer-Feedback eingeholt, sodass das Fahrassistenzsystem über seine Lebensdauer für den Fahrer 2 ein persönliches Profil lernt. Hierdurch kann für den Fahrer 2 ein deutlicher Kundenmehrwert geboten und eine Personalisierung des Fahrassistenzsystems 4 und eines Fahrerlebnisses des Fahrers 2 erreicht werden.

Das Auswählen des zu verwendenden Fahrprofils 32 und das entsprechende Umschalten 22 kann insbesondere dann, wenn es sich bei dem Kraftwagen 1 um ein Elektrofahrzeug handelt, besonders vorteilhaft sein, da dadurch im Vergleich zu einer Erhöhung einer Batteriekapazität eine Reichweite des Kraftwagens 1 vergrößert und somit ein kostenneutraler Beitrag zur Verringerung der sogenannten Reichweitenangst (englisch: "range anxiety") realisiert werden kann.

Die hier vorgestellte Lösung bietet - zumindest durch die oder bei Verwendung der auf vorgegebenen Regeln basierenden automatischen Profilauswahl - eine dynamische, aber auf festen Kriterien basierende und damit reproduzierbare automatische Profilumschaltung. Die Kriterien der Profilumschaltung basieren auf einer festgelegten, parametergesteuerten Manöverdetektion. Die Manöverdetektion kann anhand von, gegebenenfalls vorverarbeiteten, Fahrzeug-Sensordaten und/oder Strecken- oder Kartendaten erfolgen. Die Manöverdetektion kann über Schwellenabfragen physikalischer Signalwerte sowie Verknüpfungen logischer Bedingungen, deren Grenzen und Hystereseverhalten durch Parameter angepasst werden können, erfolgen. Im Zusammenhang mit der Erkennung des Fahrertyps beziehungsweise des Fahrstils wird durch Einholen von Fahrer-Feedback mittels Machine-Learning oder künstlicher Intelligenz ein fahrerspezifisches Profil oder Verhalten für das Fahrassistenzsystem 4 gelernt.

Beispielsweise kann anhand von Streckendaten eine Tempo-30-Zone erkannt und auf Basis dessen das ökonomische Eco-Fahrprofil 26 ausgewählt werden, welches eine sparsame Fahrweise einstellt. Bei einem durch Kickdown, also eine Bedienhandlung des Fahrers 2 erkannten Beschleunigungswunsch oder Überholvorgang, wird dann etwa eine im (Elektro-) Antrieb des Kraftwagens 1 verfügbare Boostleistung bereitgestellt und eine sportliche Fahrwerks- und Antriebseinstellung, also das Sport-Fahrprofil 27, ausgewählt, um den dynamischen Vorgang, also das aktuelle Manöver 28, 29, 30, zu vereinfachen und zu beschleunigen. Bei wiederkehrendem Handeln des Fahrers 2 wird er durch die Abfrage 23 gefragt, ob er in dieser Situation zukünftig zum Beispiel sportlich fahren, also das Sport-Fahrprofil 27 nutzen möchte. Bestätigt der Fahrer 2 dies, so lernt der Algorithmus des Fahrassistenzsystems 4 dieses und stellt dem Fahrer 2 zukünftig diese Einstellung, also das Sport-Fahrprofil 27, automatisch ein.

Insgesamt zeigen die beschriebenen Beispiele, wie eine individualisierte automatische Fahrprofilauswahl ermöglicht werden kann.

### Bezugszeichenliste

- 1: Kraftwagen
- 2: Fahrer
- 3: Sensorik
- 4: Fahrassistenzsystem
- 5: Speicher
- 6: Fahrzeugeinrichtung
- 7: Bussystem
- 8: Benutzerinterface
- 9: Kommunikationsmodul
- 10: Servereinrichtung
- 11: Schema
- 12: Umgebungsdaten
- 13: Fahrzeugdaten
- 14: Aufbereitung
- 15: Kameradaten
- 16: Vorverarbeitung
- 17: erstes neuronales Netz
- 18: Fahrprofilauswahl
- 19: zweites neuronales Netz
- 20: Abgleich (aktuelles Fahrprofil gegen ausgewähltes Fahrprofil)
- 21: aktuelles Fahrprofil
- 22: Umschalten
- 23: Abfrage
- 24: Anpassen
- 25: Comfort-Fahrprofil
- 26: Eco-Fahrprofil
- 27: Sport-Fahrprofil
- 28, 29, 30: Manöver
- 31: Priorisierung
- 32: zu verwendendes Fahrprofil

## Patentansprüche

1. Verfahren (11) zum Auswählen (18) eines zu verwendenden Fahrprofils (32) eines Kraftwagens (1), bei welchem das jeweils aktuell zu verwendende Fahrprofil (32) mittels eines Fahrassistenzsystems (4) des Kraftwagens (1) situationsabhängig automatisch aus mehreren vorgegebenen Fahrprofilen, die jeweils wenigstens eine Betriebseigenschaft des Kraftwagens (1) bestimmen, ausgewählt wird,
wobei mittels des Fahrassistenzsystems (4) automatisch
- anhand wenigstens einer durch einen Fahrer des Kraftwagens (1) vorgenommenen Bedienhandlung des Kraftwagens (1) eine Abweichung zwischen dem aktuell von dem Fahrer gewünschten (32) und dem bis dahin verwendeten (21) der mehreren vorgegebenen Fahrprofile (25, 26, 27) erkannt wird,
- nach dem Erkennen der Abweichung eine Abfrage (23) an den Fahrer (2) ausgegeben wird, ob die Abweichung für die aktuelle Situation von dem Fahrassistenzsystem (4) angelernt werden soll, und
- nach einer Bestätigung der Abfrage (23) das Fahrassistenzsystem (4) für die aktuelle Situation gemäß dem aktuell von dem Fahrer (2) gewünschten Fahrprofil (32) in zumindest einem das Auswählen des zu verwendenden Fahrprofils beeinflussenden Parameter dahingehend angepasst wird, dass die Abweichung beim automatischen Auswählen (18) des zu verwendenden Fahrprofils (32) in zukünftigen Situationen, die der aktuellen Situation entsprechen, berücksichtigt wird
**dadurch gekennzeichnet, dass**
durch Auswerten von eine jeweils aktuelle Fahrsituation charakterisierenden Situationsdaten (12, 13) automatisch ein jeweils aktuelles Fahrmanöver (28, 29, 30) erkannt wird und bei mehreren gleichzeitig erkannten Fahrmanövern (28, 29, 30), denen jeweils eines der vorgegebenen Fahrprofile (25, 26, 27) vorgegeben zugeordnet ist, das Fahrassistenzsystem (4) das zu verwendende der vorgegebenen Fahrprofile (25, 26, 27) in Abhängigkeit von einer vorgegebenen Priorisierung der Fahrmanöver (28, 29, 30) auswählt und/oder
als Teil der jeweils aktuellen Situation automatisch eine zugehörige räumliche Position des Kraftwagens (1), an der es zu der Abweichung kam, erfasst wird und auf die erste Bestätigung hin zunächst das Fahrassistenzsystem (4) nur für die erfasste Position angepasst wird und erst dann, wenn die Abweichung mehrfach für dieser Situation entsprechende Situationen an unterschiedlichen räumlichen Positionen erkannt und die entsprechenden Abfragen bestätigt wurden, das Fahrassistenzsystem (4) positionsunabhängig für alle zukünftigen gleichartigen Situationen entsprechend angepasst wird..

2. Verfahren (11) nach Anspruch 1,
**dadurch gekennzeichnet, dass**
als die durch den Fahrer (2) vorgenommene Bedienhandlung ein manuelles Auswählen eines der mehreren vorgegebenen Fahrprofile (25, 26, 27) ausgewertet wird.

3. Verfahren (11) nach einem der vorhergehenden Ansprüche,
**dadurch gekennzeichnet, dass**
als die durch den Fahrer (2) vorgenommene Bedienhandlung ein von dem Fahrer (2) durchgeführtes Fahrmanöver anhand von aktuellen Werten vorgegebener Parameter automatisch erkannt und ausgewertet wird.

4. Verfahren (11) nach einem der vorhergehenden Ansprüche,
**dadurch gekennzeichnet, dass**
das Fahrassistenzsystem (4) für das situationsabhängige Auswählen (18) eines der mehreren vorgegebenen Fahrprofile (25, 26, 27) ein auf vorgegebenen Regeln basierendes Basismodul als Rückfallmechanismus und ein Lernmodul für das Anpassen (24) des Fahrassistenzsystems (4) umfasst, wobei
- durch des Basismodul zum Auswählen (18) des Fahrprofils (32) vorgegebene Arten von über ein Fahrzeugbussystem (7) empfangenen Datensignalen durch eine vorgegebene Regelmatrix verarbeitet werden, und
- das Lernmodul die Bedienhandlung und eine jeweils aktuelle Fahrsituation charakterisierende Situationsdaten (12, 13, 15) mittels einer Methode des maschinellen Lernens, insbesondere mittels wenigstens eines neuronalen Netzes (17, 19), verarbeitet.

5. Verfahren (11) nach einem der vorhergehenden Ansprüche,
**dadurch gekennzeichnet, dass**
das Fahrassistenzsystem (4) auf Basis von mehreren unterschiedlichen Datenquellen jeweils einen Profilkandidaten für das zu verwendende Fahrprofil (32) bestimmt und aus diesen mehreren Profilkandidaten in Abhängigkeit von einer vorgegebenen Priorisierung der vorgegebenen Fahrprofile (25, 26, 27) das zu verwendende Fahrprofil (32) auswählt.

6. Verfahren (11) nach einem der vorhergehenden Ansprüche,
**dadurch gekennzeichnet, dass**
die Abfrage (23) erst dann an den Fahrer (2) ausgegeben wird, wenn in mehreren der aktuellen Situation entsprechenden Situationen die gleiche Abweichung erkannt worden ist.

7. Verfahren (11) nach einem der vorhergehenden Ansprüche,
**dadurch gekennzeichnet, dass**
das Fahrassistenzsystem (4) automatisch
- einen Fahrertyp des Fahrers (2) bestimmt und dem Fahrer (2) zuordnet,
- aus den mehreren vorgegebenen Fahrprofilen (25, 26, 27) wenigstens ein zu dem bestimmten Fahrertyp nicht passendes Fahrprofil (25, 26, 27) bestimmt, und
- das automatische Auswählen des nicht zu dem bestimmten Fahrertyp passenden Fahrprofils (25, 26, 27) verhindert oder beschränkt.

8. Verfahren (11) nach einem der vorhergehenden Ansprüche,
**dadurch gekennzeichnet, dass**
das Fahrassistenzsystem (4) als Teil der Abfrage (23) oder nach dem Bestätigen der Abfrage (23) einen von dem Fahrassistenzsystem (4) automatisch bestimmten Profilvorschlag für das in der aktuellen Situation oder der aktuellen Situation entsprechenden zukünftigen Situationen zu verwendende Fahrprofil (32) an den Fahrer (2) ausgibt und erst nach Bestätigung des Profilvorschlags das Fahrassistenzsystem (4) dahingehend anpasst, das zukünftig in der aktuellen Situation entsprechenden Situationen automatisch das dem bestätigten Profilvorschlag entsprechende (32) der mehreren vorgegebenen Fahrprofile (25, 26, 27) ausgewählt wird.

9. Verfahren (11) nach einem der vorhergehenden Ansprüche,
**dadurch gekennzeichnet, dass**
- der jeweilige Fahrer (2) automatisch identifiziert wird,
- für jeden unterschiedlichen identifizierten Fahrer (2) ein persönliches Profil, das die von dem jeweiligen Fahrer (2) veranlassten individuellen Anpassungen des Fahrassistenzsystem (4) enthält, angelegt wird,
- nach dem Anpassen des Fahrassistenzsystem (4) und einer entsprechenden Aktualisierung des jeweiligen persönlichen Profils dieses über eine, insbesondere kabellose, Datenverbindung automatisch an eine fahrzeugexterne Servereinrichtung (10) übermittelt wird, und
- nach einer Inbetriebnahme des Fahrassistenzsystems (4) das aktualisierte persönliche Profil für den jeweils identifizierten Fahrer (2) über die Datenverbindung automatisch von der Servereinrichtung (10) abgerufen und von dem Fahrassistenzsystem (4) des jeweiligen Kraftwagens (1) verwendet wird.

10. Fahrassistenzsystem (4) für einen Kraftwagen (1), welches eine Datenverarbeitungseinrichtung (4) mit einer Schnittstelle zum Empfangen von von dem Kraftwagen bereitgestellten, eine jeweils aktuelle Situation charakterisierenden Datensignalen und ein Benutzerinterface (8) aufweist,
**dadurch gekennzeichnet, dass**
das Fahrassistenzsystem (4) dazu eingerichtet ist, ein Verfahren (11) gemäß einem der vorhergehenden Ansprüche durchzuführen und dazu eine Speichereinrichtung (5) mit einem das Verfahren (11) repräsentierenden und mittels der Datenverarbeitungseinrichtung (4) ausführbaren Programmcode aufweist.

11. Kraftwagen (1) mit einer Sensorik (3) zur Umgebungserfassung und mit einem Bussystem (7) zum Bereitstellen von eine jeweils aktuelle Situation charakterisierenden Datensignalen (12, 13) der Sensorik (3) an ein Fahrassistenzsystem (4) des Kraftwagens (1),
**dadurch gekennzeichnet, dass**
das Fahrassistenzsystem (4) des Kraftwagens (1) ein an das Bussystem (7) angeschlossenes Fahrassistenzsystem (4) nach Anspruch 10 ist.

12. Kraftwagen (1) nach Anspruch 11,
**dadurch gekennzeichnet, dass**
der Kraftwagen (1), insbesondere dessen Fahrassistenzsystem (4), eingerichtet ist für eine manuelle Veränderung einer Zuordnung zwischen vorgegebenen Fahrmanövern (28, 29, 30) und den mehreren vorgegebenen Fahrprofilen (25, 26, 27) durch den Fahrer (2) über ein Benutzerinterface (8).

## Claims

1. Method (11) for selecting (18) a driving profile (32) to be used of a motor vehicle (1), in which method the driving profile (32) currently to be used is selected automatically by means of a driver assistance system (4) of the motor vehicle (1), depending on the situation, from a plurality of predetermined driving profiles, each of which determines at least one operating property of the motor vehicle (1),
the driver assistance system (4) being used to carry out the following automatically:
- on the basis of at least one operating action of the motor vehicle (1) carried out by a driver of the motor vehicle (1), a deviation between the driving profile (32) currently desired by the driver and the driving profile (21) used until then of the plurality of predetermined driving profiles (25, 26, 27) is detected,
- after the detection of the deviation, a query (23) is output to the driver (2) as to whether the deviation for the current situation should be learned by the driver assistance system (4), and
- after confirmation of the query (23), the driver assistance system (4) is adapted for the current situation according to the driving profile (32) currently desired by the driver (2) in at least one parameter influencing the selection of the driving profile to be used in such a way that the deviation is taken into account when automatically selecting (18) the driving profile (32) to be used in future situations corresponding to the current situation
**characterized in that**
by evaluating situation data (12, 13) characterizing a current driving situation, a relevant current driving maneuver (28, 29, 30) is automatically detected and, in the case of several simultaneously detected driving maneuvers (28, 29, 30) to which one of the predetermined driving profiles (25, 26, 27) is assigned in each case, the driver assistance system (4) selects the driving profile to be used of the predetermined driving profiles (25, 26, 27) depending on a predetermined prioritization of the driving maneuvers (28, 29, 30) and/or
as part of the relevant current situation, an associated spatial position of the motor vehicle (1) at which it came to the deviation is detected automatically and the driver assistance system (4) is first adapted to the first confirmation only for the detected position and the driver assistance system (4) is adapted in a position-independent manner for all future similar situations only when the deviation detects situations corresponding to this situation several times at different spatial positions and the corresponding queries have been confirmed.

2. Method (11) according to claim 1,
**characterized in that**
a manual selection of one of the plurality of predetermined driving profiles (25, 26, 27) is evaluated as the operating action performed by the driver (2).

3. Method (11) according to either of the preceding claims,
**characterized in that**
as the operating action performed by the driver (2), a driving maneuver carried out by the driver (2) is automatically detected and evaluated using current values of predetermined parameters.

4. Method (11) according to any of the preceding claims,
**characterized in that**
the driver assistance system (4) comprises, for the situation-dependent selection (18) of one of the plurality of predetermined driving profiles (25, 26, 27), a base module based on predetermined rules as a fallback mechanism and a learning module for the adaptation (24) of the driver assistance system (4),
- predetermined types of data signals received via a vehicle bus system (7) being processed by a predetermined control matrix by the base module for selecting (18) the driving profile (32), and
- the learning module processing the operating action and situation data (12, 13, 15) characterizing the current driving situation by means of a machine learning method, in particular by means of at least one neural network (17, 19).

5. Method (11) according to any of the preceding claims,
**characterized in that**
the driver assistance system (4), on the basis of a plurality of different data sources, determines in each case a profile candidate for the driving profile (32) to be used and selects the driving profile (32) to be used from these plurality of profile candidates depending on a predetermined prioritization of the predetermined driving profiles (25, 26, 27).

6. Method (11) according to any of the preceding claims,
**characterized in that**
the query (23) is only output to the driver (2) when the same deviation has been detected in a plurality of situations corresponding to the current situation.

7. Method (11) according to any of the preceding claims,
**characterized in that**
the driver assistance system (4) automatically
- determines a driver type of the driver (2) and associates it with the driver (2),
- determines at least one driving profile (25, 26, 27) that does not fit the determined driver type from the plurality of predetermined driving profiles (25, 26, 27), and
- prevents or restricts the automatic selection of the driving profile (25, 26, 27) not matching the determined driver type.

8. Method (11) according to any of the preceding claims,
**characterized in that**
the driver assistance system (4) outputs, as part of the query (23) or after the confirmation of the query (23), a profile proposal automatically determined by the driver assistance system (4) for the driving profile (32) to be used in the current situation or future situations corresponding to the current situation to the driver (2), and, only after confirmation of the profile proposal, adapts the driver assistance system (4) in such a way that in future, in situations corresponding to the current situation, the driving profile (32) of the plurality of predetermined driving profiles (25, 26, 27) corresponding to the confirmed profile proposal is selected.

9. Method (11) according to any of the preceding claims,
**characterized in that**
- the relevant driver (2) is automatically identified,
- for each different identified driver (2), a personal profile containing the individual adaptations of the driver assistance system (4) caused by the relevant driver (2) is applied,
- after the adaptation of the driver assistance system (4) and a corresponding update of the relevant personal profile, this is automatically transmitted to a vehicle-external server device (10) via an in particular wireless data connection, and
- after the driver assistance system (4) has been put into operation, the updated personal profile for the relevant identified driver (2) is automatically retrieved by the server device (10) via the data connection and is used by the driver assistance system (4) of the relevant motor vehicle (1).

10. Driver assistance system (4) for a motor vehicle (1), comprising a data processing device (4) with an interface for receiving data signals which are provided by the motor vehicle and characterize a relevant current situation, and comprising a user interface (8),
**characterized in that**
the driver assistance system (4) is designed to carry out a method (11) according to any of the preceding claims and for this purpose has a memory device (5) with a program code that represents the method (11) and can be executed by means of the data processing device (4).

11. Motor vehicle (1) comprising a sensor system (3) for detecting the environment and a bus system (7) for providing data signals (12, 13) of the sensor system (3) that characterize a current situation in each case to a driver assistance system (4) of the motor vehicle (1),
**characterized in that**
the driver assistance system (4) of the motor vehicle (1) is a driver assistance system (4) according to claim 10 connected to the bus system (7).

12. Motor vehicle (1) according to claim 11,
**characterized in that**
the motor vehicle (1), in particular the driver assistance system (4) thereof, is designed to manually change an assignment between predetermined driving maneuvers (28, 29, 30) and the plurality of predetermined driving profiles (25, 26, 27) by the driver (2) via a user interface (8).

## Revendications

1. Procédé (11) pour la sélection (18) d'un profil de conduite (32) à utiliser d'un véhicule automobile (1), dans lequel le profil de conduite (32) respectif réel à utiliser est sélectionné au moyen d'un système d'assistance à la conduite (4) du véhicule automobile (1) de manière automatique en fonction de la situation parmi plusieurs profils de conduite prédéfinis, qui déterminent respectivement au moins une propriété de fonctionnement du véhicule automobile (1),
dans lequel au moyen du système d'assistance à la conduite (4)
- à l'aide d'au moins une manipulation du véhicule automobile (1) effectuée par un conducteur du véhicule automobile (1), un écart entre le profil de conduite (32) réellement souhaité par le conducteur et le profil de conduite (21) utilisé jusque là parmi les plusieurs profils de conduite prédéfinis (25, 26, 27) est reconnu automatiquement,
- après la reconnaissance de l'écart, une interrogation (23) est émise automatiquement vers le conducteur (2), pour savoir si l'écart doit être appris pour la situation actuelle par le système d'assistance à la conduite (4) et
- après une confirmation de l'interrogation (23), le système d'assistance à la conduite (4), pour la situation actuelle selon le profil de conduite (32) réellement souhaité par le conducteur (2), est adapté automatiquement sur au moins un paramètre influençant la sélection du profil de conduite à utiliser, dans le sens où l'écart est pris en compte lors de la sélection (18) automatique du profil de conduite à utiliser (32) dans des situations futures, qui correspondent à la situation actuelle
**caractérisé en ce que**
par l'évaluation de données de situation (12, 13) caractérisant une situation de conduite réelle respective, une manoeuvre de conduite (28, 29, 30) respective réelle est automatiquement reconnue et, en cas de plusieurs manoeuvres de conduite (28, 29, 30) reconnues en même temps, auxquelles un des profils de conduite prédéfinis (25, 26, 27) défini est respectivement attribué, le système d'assistance à la conduite (4) sélectionne le profil de conduite prédéfini (25, 26, 27) à utiliser en fonction d'un ordre de priorité prédéfini des manoeuvres de conduite (28, 29, 30) et/ou
une position spatiale associée du véhicule automobile (1), au niveau de laquelle l'écart a été effectué, est détectée automatiquement comme une partie de la situation réelle respective et, lors de la première confirmation, tout d'abord, le système d'assistance à la conduite (4) n'est adapté que pour la position détectée et, seulement lorsque l'écart est reconnu plusieurs fois pour des situations correspondant à cette situation au niveau de positions spatiales différentes et que les interrogations correspondantes sont confirmées, le système d'assistance à la conduite (4) est adapté de manière correspondante indépendamment de la position pour toutes les situations futures similaires.

2. Procédé (11) selon la revendication 1,
**caractérisé en ce que**
une sélection manuelle d'un des plusieurs profils de conduite prédéfinis (25, 26, 27) est évaluée comme une manipulation effectuée par le conducteur (2).

3. Procédé (11) selon l'une quelconque des revendications précédentes,
**caractérisé en ce que**
une manoeuvre de conduite réalisée par le conducteur (2) est reconnue et évaluée automatiquement comme manipulation effectuée par le conducteur (2) à l'aide de valeurs réelles d'un paramètre prédéfini.

4. Procédé (11) selon l'une quelconque des revendications précédentes,
**caractérisé en ce que**
le système d'assistance à la conduite (4) comprend, pour la sélection en fonction de la situation (18) d'un des plusieurs profils de conduite prédéfinis (25, 26, 27), un module de base basé sur des règles prédéfinies en tant que mécanisme de réversion et un module d'apprentissage pour l'adaptation (24) du système d'assistance à la conduite (4), dans lequel
- des types prédéfinis de signaux de données reçus par le biais d'un système de bus de véhicule (7) sont traitées par le module de base pour la sélection (18) du profil de conduite (32) par le biais d'une matrice de règles prédéfinie et
- le module d'apprentissage traite la manipulation et des données de situation (12, 13, 15) caractérisant une situation de conduite réelle respective au moyen d'une méthode d'apprentissage machine, en particulier au moyen d'au moins un réseau neuronal (17, 19).

5. Procédé (11) selon l'une quelconque des revendications précédentes,
**caractérisé en ce que**
le système d'assistance à la conduite (4) détermine respectivement un profil candidat pour le profil de conduite (32) à utiliser sur la base de plusieurs sources de données différentes et sélectionne le profil de conduite (32) à utiliser à partir de ces plusieurs profils candidats en fonction d'un ordre de priorité prédéfini des profils de conduite prédéfinis (25, 26, 27).

6. Procédé (11) selon l'une quelconque des revendications précédentes,
**caractérisé en ce que**
l'interrogation (23) n'est émise vers le conducteur (2) que lorsque le même écart a été reconnu dans plusieurs situations correspondant à la situation réelle.

7. Procédé (11) selon l'une quelconque des revendications précédentes,
**caractérisé en ce que**
le système d'assistance à la conduite (4)
- détermine automatiquement un type de conducteur du conducteur (2) et l'attribue au conducteur (2),
- détermine automatiquement parmi les plusieurs profils de conduite prédéfinis (25, 26, 27) au moins un profil de conduite (25, 26, 27) non adapté au type de conducteur déterminé et
- empêche ou limite automatiquement la sélection automatique du profil de conduite (25, 26, 27) non adapté au type de conducteur déterminé.

8. Procédé (11) selon l'une quelconque des revendications précédentes,
**caractérisé en ce que**
le système d'assistance à la conduite (4), dans le cadre de l'interrogation (23) ou après la confirmation de l'interrogation (23), émet vers le conducteur (2) une proposition de profil déterminée automatiquement par le système d'assistance à la conduite (4) pour le profil de conduite (32) à utiliser dans la situation réelle ou des situations futures correspondant à la situation réelle et, seulement après confirmation de la proposition de profil, le système d'assistance à la conduite (4) adapte, **en ce que** qu'à l'avenir, dans des situations correspondant à la situation réelle, le profil de conduite (32) correspondant à la proposition de profil confirmée est automatiquement sélectionné parmi les plusieurs profils de conduite prédéfinis (25, 26, 27).

9. Procédé (11) selon l'une quelconque des revendications précédentes,
**caractérisé en ce que**
- le conducteur respectif (2) est identifié automatiquement,
- pour chaque conducteur (2) identifié différent, un profil personnel, qui contient les adaptations individuelles à l'initiative du conducteur respectif (2) du système d'assistance à la conduite (4), est créé,
- après l'adaptation du système d'assistance à la conduite (4) et une actualisation correspondante du profil personnel respectif, celui-ci est transmis automatiquement à un dispositif serveur (10) externe au véhicule par le biais d'une connexion de données, en particulier sans fil, et
- après une mise en service du système d'assistance à la conduite (4), le profil personnel actualisé pour le conducteur (2) respectif identifié est appelé automatiquement depuis le dispositif serveur (10) par le biais de la connexion de données et utilisé par le système d'assistance à la conduite (4) du véhicule automobile (1) respectif.

10. Système d'assistance à la conduite (4) pour un véhicule automobile (1), qui présente un dispositif de traitement de données (4) avec une interface pour la réception de signaux de données caractérisant une situation réelle respective fournis par le véhicule automobile et une interface utilisateur (8),
**caractérisé en ce que**
le système d'assistance à la conduite (4) est conçu pour réaliser un procédé (11) selon l'une quelconque des revendications précédentes et présente dans ce but un dispositif de mémoire (5) avec un code de programme représentant le procédé (11) et pouvant être exécuté au moyen du dispositif de traitement de données (4).

11. Véhicule automobile (1) comprenant des capteurs (3) pour la détection d'environnement et un système de bus (7) pour fournir des signaux de données (12, 13) caractérisant une situation réelle respective des capteurs (3) à un système d'assistance à la conduite (4) du véhicule automobile (1),
**caractérisé en ce que**
le système d'assistance à la conduite (4) du véhicule automobile (1) est un système d'assistance à la conduite (4) raccordé au système de bus (7) selon la revendication 10.

12. Véhicule automobile (1) selon la revendication 11,
**caractérisé en ce que**
le véhicule automobile (1), en particulier son système d'assistance à la conduite (4), est conçu pour une modification manuelle d'une attribution entre des manoeuvres de conduite prédéfinies (28, 29, 30) et les plusieurs profils de conduite prédéfinis (25, 26, 27) par le conducteur (2) par le biais d'une interface utilisateur (8).
